(19) 

Europäisches
Patentamt
European
Patent Office
Office européen
des brevets

(11) **EP 4 530 603 A1**

(12) **EUROPEAN PATENT APPLICATION**

(43) Date of publication:
**02.04.2025  Bulletin 2025/14**

(21) Application number: **23200198.2**

(22) Date of filing: **27.09.2023**

(51) International Patent Classification (IPC):
**G01N 15/02** (2024.01)  **G01N 15/075** (2024.01)
**G01N 15/10** (2024.01)  **G01N 21/21** (2006.01)
**G01N 21/47** (2006.01)  **G01N 15/00** (2024.01)

(52) Cooperative Patent Classification (CPC):
**G01N 15/0211; G01N 15/075;** G01N 2015/0222;
G01N 2015/0294; G01N 2015/03; G01N 2015/1006;
G01N 2015/103; G01N 2015/1493;
G01N 2015/1497

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Malvern Panalytical Limited
Malvern, Worcestershire WR14 1XZ (GB)**

(72) Inventors:
• **Corbett, Jason
  Malvern, WR14 1XZ (GB)**

• **Catterall, Cllive
  Malvern, WR14 1XZ (GB)**
• **Marwick, Daniel
  Malvern, WR14 1XZ (GB)**
• **Poolman, Rhys
  Malvern, WR14 1XZ (GB)**
• **Kippax, Paul
  Malvern, WR14 1XZ (GB)**
• **Langley, Cathryn
  Malvern, WR14 1XZ (GB)**

(74) Representative: **Barker Brettell LLP
  100 Hagley Road
  Edgbaston
  Birmingham, West Midlands B16 8QQ (GB)**

(54) **DIFFRACTIVE PARTICLE CHARACTERISATION**

(57)    A particle characterisation apparatus (200), comprising: a sample cell (210) for containing or supporting a sample comprising particles; a polychromatic light source (205) configured to illuminate the sample cell (210) with a polychromatic illumination beam (220) along an illumination axis, thereby producing scattered light (230) from the interaction of the illumination beam (220) with particles of the sample; a spectrograph (215) arranged to receive and detect the scattered light (230) and detect a variation in scattering intensity with respect to scattering angle and with respect to a wavelength of the scattered light.

Figure 2

**Description**

**Field of the invention**

The present invention relates to particle characterisation, and to improvements in particle characterisation.

**Background**

Particles may be characterised using light diffraction, in which a beam of light illuminates a sample comprising particles and the variation in scattered light over a range of scattering angles is detected. The scattering pattern (i.e. the variation in the intensity of scattered light vs scattering angle) can be used to determine an average particle size, or a particle size distribution, based on Mie scattering theory.

An example of an instrument for characterising particles using light diffraction is the Mastersizer 3000, from Malvern Panalytical Ltd, UK. This instrument comprises two light sources with different wavelengths and detectors arranged to receive light scattered at different angles to the illuminating light beam. The light sources sequentially illuminate the sample, and the resulting combined scattered data is used to characterise the particles.

In such instruments the illuminating light is typically linearly polarised and the detectors are arranged to detect light in a scattering plane, which is defined as the plane normal to the polarisation direction of the illuminating light beam. Scattering intensity may vary in different directions relative to the polarisation orientation: for example, non-spherical particles may result in different scattering intensity in directions normal to and parallel with the polarisation direction of the illuminating light beam. Some instruments therefore include detectors for receiving light scattered at different directions to the polarisation orientation of the illuminating light beam.

Implementing detection of more than a single wavelength or polarisation state in existing diffraction based particle characterisation instruments is relatively difficult. A bespoke detector geometry is typically required for each wavelength and polarisation state of interest. This is why only single or at most dual wavelength (with a limited number of second wavelength detectors) instruments are currently commercially available. A solution to at least some of these problems is desirable.

**Summary**

According to a first aspect of the invention, there is provided a particle characterisation apparatus, comprising:

a sample cell for containing or supporting a sample comprising particles;
a polychromatic light source configured to illuminate the sample cell with a polychromatic illumination beam along an illumination axis, thereby producing scattered light from the interaction of the illumination beam with particles of the sample;
a spectrograph arranged to receive and detect the scattered light and detect a variation in scattering intensity with respect to scattering angle and a variation in scattering intensity with respect to a wavelength of the scattered light.

The polychromatic light source may comprise a broad spectrum light source. For example, a broad spectrum light source may have a spectral width of at least 50nm, or at least 100nm (FWHM). The polychromatic light source may comprise a plurality of mono-chromatic light sources and a beam combiner configured to combine the output from each of the mono-chromatic light sources to form the polychromatic illumination beam.

The spectrograph may comprise an entrance slit configured to receive scattered light with a plurality of different scattering angles.

The polychromatic light source may be configured to illuminate the sample with linearly polarised light, the orientation of the linear polarisation defining a scattering plane. The (longitudinal axis of the) entrance slit of the spectrograph may be oriented parallel with the scattering plane (or substantially parallel, e.g. at an angle of no more than 15 degrees to the polarisation orientation). The entrance slit of the spectrograph may be perpendicular to the scattering plane (or substantially perpendicular, e.g. at an angle of no more than 15 degrees from perpendicular to the polarisation orientation). The entrance slit of the spectrograph may be at an angle of 45 degrees to the scattering plane, or within a range of 30 to 60 degrees to the scattering plane.

The spectrograph may be a first spectrograph, and the apparatus may further comprise a second spectrograph. The second spectrograph may comprise an entrance slit configured to receive a plurality of different scattering angles. The entrance slit of the second spectrograph may be oriented differently to that of the first spectrograph.

The spectrograph may comprise a dispersive element and an array detector. The dispersive element may be configured to disperse light in a direction transverse to the entrance slit. The dispersive element may be configured to disperse light in a direction substantially perpendicular to the entrance slit. The dispersive element may be configured to map different wavelengths to different rows (or columns) of an array detector of the spectrograph. The spectrograph may be configured to map different scattering angles to different columns (or rows) of an array detector of the spectrograph.

The apparatus may comprise a collection optic, configured to map light scattered over a first range of scattering angles to a first range of locations on the entrance slit.

The first range of scattering angles may include forward scattered light at angles of between 0 and 45 degrees or between 10 and 30 degrees.

The collection optic may comprise a faceted optical element having a plurality of facets. Each facet may be configured to receive light scattered at a range of scattering elevation angles of less than 10 degrees and at a range of azimuth angles of at least 90 degrees (e.g. 360 degrees), and to focus the received light to a different location on the entrance slit.

The faceted optical element may comprise a faceted refracting optical element or a faceted reflecting optical element. Each facet of the faceted optical element may comprise an optical axis that is at a different orientation to the illumination beam in the sample.

The faceted optical element may comprise a Fresnel lens or reflector.

The apparatus may further comprise a supplemental collection optic, configured to map a second range of scattering angles to a second range of locations on the entrance slit. The first and second range of locations on the entrance slit may be different. The first and second range of scattering angles may be different.

The collection optic may comprise a refractive optical element and/or a reflective optical element. The collection optic and/or the supplemental collection optic (where present) may comprise a refractive and/or a reflective optical element.

The apparatus may comprise a plurality of supplemental collection optics, each supplemental collection optic mapping a different range of scattering angles to different range of locations at the entrance slit.

The at least one supplemental collection optic may be configured to collect at least one of: forward scattered light at an angle of at least 30 degrees to the illumination beam in the sample; back scattered light; side scattered light. A plurality of supplemental collection optics may be provided to collect different ranges of high angle forward scattered light, where high angle means > 30 degrees to the illumination beam in the sample.

The collection optic may comprise an optical fibre. The supplemental collection optic (where present) may comprise an optical fibre. Where there are a plurality of supplemental collection optics, at least some (e.g. all) of the supplemental collection optics may comprise an optical fibre.

The mapping of scattering angle to position along the entrance slit may be discontinuous.

The spectrograph may comprise a miniature spectrograph. The miniature spectrograph may be contained within a volume of 8cm cubed or less. The miniature spectrograph may comprise: stationary-wave integrated Fourier transform spectrometry; photonic crystal spectrometry; arrayed waveguides; Lippman spectrographs; Fabry-Perot cavities; and/or arrays of wavelength selective components.

The apparatus may be configured to perform Mie scattering ellipsometry at a plurality of scattering angles and a plurality of wavelengths. The apparatus may comprise: an adjustable polarising illumination filter and/or an adjustable polarising detection filter. The adjustable polarising illumination filter and/or adjustable polarising detection filter may be operable to sequentially select polarisation states of scattered light for detection to enable the Stokes vector for the scattered light to be determined.

The apparatus may be configured to perform Mie scattering ellipsometry at a plurality of scattering angles and a plurality of wavelengths by amplitude splitting of light in at least four different polarisation states, the polarisation states selected to enable determination of the Stokes vector for the scattered light. The detector may be configured to receive each of the polarisation states of scattering for each of the plurality of scattering angles and each of the plurality of wavelengths at the same time.

The apparatus may be configured to perform dual phase interferometry. The apparatus may comprise:

a beam splitter, for sampling at least a portion of the illumination beam;
a reference beam polariser, configured to circularly polarise the sampled portion of the illumination beam to form a reference beam;
a scatter polarising filter, configured to pass scattered light having a 45 degree linear polarisation, thereby producing polarised scattered light with multiple scattering angles and multiple wavelengths;
a beam combiner, configured to interfere the reference beam and the polarised scattered light to form interference light; and/or
a polarising beam splitter, configured to split the interference light into a first linearly polarised component and a second linearly polarised component, the second linearly polarised component having a polarisation orientation orthogonal to the first linearly polarised component.

The spectrograph may receive both the first and second linearly polarised component.

A reference beam optical path between the beam splitter and the beam combiner may comprise an optical fibre, or a fixed optical path, or a combination of both an optical fibre and a fixed optical path. In some embodiments the reference beam optical path may be allowed to pass through the sample cell (which may be appropriate for measurement of very low concentration samples).

The apparatus may further comprise a processor, configured to determine a particle size and/or a particle size distribution from an output of the spectrograph (e.g. based on Mie scattering theory). The processor may be configured to determine a particle size distribution for each of a plurality of wavelengths.

The apparatus may be configured to modify aspects of the configuration of the apparatus in response to: characteristics of the sample that are determined through an initial analysis step performed by the apparatus; expected sample properties; and/or changes in sample properties during the measurement.

According to a second aspect of the invention, there is provided a method of characterising particles, comprising:

illuminating a sample comprising particles with a polychromatic light beam; and
detecting scattered light created by the interaction of the polychromatic light beam with the particles using a spectrograph.

The spectrograph is arranged to detect a variation in scattering intensity with respect to scattering angle and with respect to wavelength of the scattered light.

The method may comprise using an apparatus according to the first aspect, including any of the optional features thereof.

**Detailed description**

Embodiments of the invention will be described, purely by way of example, with reference to the accompanying drawings, in which:

Figure 1 shows a prior art apparatus for determining particle size by laser diffraction;

Figure 2 shows an apparatus according to an embodiment;

Figure 3 shows an optical arrangement for illuminating a sample cell and collecting scattered light at an entrance slit;

Figure 4 shows an apparatus according to an embodiment in which a mirror is used to fold the optical detection path;

Figure 5 shows an apparatus according to an embodiment, in which a faceted lens is used to collect and focus light scattered over a broad range of azimuth angle and focus this at the entrance slit;

Figure 6 shows an example faceted lens in more detail;

Figure 6a shows an example collection optic that comprises a Fresnel lens;

Figure 7 shows an apparatus according to an embodiment, comprising a faceted mirror configured to collect and focus light scattered over a broad range of azimuth angle and focus this at the entrance slit;

Figure 8 shows an apparatus according to an embodiment, in which supplemental optical elements direct light scattered at higher angles to the entrance slit;

Figure 9 shows an apparatus according to an embodiment, in which supplemental optical elements are fibre coupled to the entrance slit;

Figure 10 shows a lenslet array for coupling scattered light to a 1D fibre array;

Figure 11 shows an alternative lenslet array for coupling scattered light to a 2D fibre array or multicore fibre;

Figure 12 shows a telecentric lens in combination with a lenslet array for collecting scattered light into optical fibres;

Figure 13 shows an example embodiment in which a plurality of miniature spectrographs are employed, each receiving scattered light from a different range of scattering angles;

Figure 14 shows theoretical scattering intensity over a range of scattering angles from 0 to 180 degrees, according to Mie scattering theory for a small particle;

Figure 15 is an alternative plot showing the same data as Figure 14, with a different scale so that the difference between parallel and perpendicular scattering planes can be better appreciated;

Figure 15a shows the arrangement of scattering angles in the parallel and perpendicular scattering plane;

Figure 16 shows an apparatus according to an embodiment in which there are two spectrographs, one for detecting light scattered at a range of azimuth angles in the scattering plane and another for detecting light scattered at a high elevation angle;

Figure 16a shows an apparatus according to an embodiment in which there are two spectrographs, one for detecting light scattered at a range of azimuth angles in the scattering plane and another for detecting light scattered at a range of elevation angles in a plane substantially perpendicular to the scattering plane;

Figure 17 shows an apparatus according to an embodiment in which a polarisation selector is used to enable separate detection of different polarisation states, with different polarisation states incident at different regions of an entrance slit of a spectrograph;

Figure 18 shows an apparatus according to an alternative embodiment in which a polarisation selector is used to enable separate detection of different polarisation states, with different polarisation states incident at entrance slits of different spectrographs;

Figure 19 shows an example of a polarisation selector, in the form of a Fresnel prism;

Figure 20 shows a plot of scattering intensity over a range of scattering angles, according to Mie scattering theory, for a number of particle sizes;

Figure 21a shows a plot of a scattered light signal received at a plurality of detectors for various particle sizes across a 10 second detection window;

Figure 21b shows an extracted time section of the data shown in Figure 21a;

Figure 21c shows a further extracted time section of the data shown in Figure 21b;

Figure 22 shows an apparatus according to an embodiment that comprises adjustable polarising illumination filters and adjustable an adjustable polarising detection filter;

Figure 23 shows an apparatus according to an alternative arrangement of the embodiment of Figure 22;

Figure 24 shows an apparatus according to an embodiment, comprising an amplitude splitting diffractive spectra-polarimeter for Mie scattering ellipsometry;

Figure 25 shows an apparatus according to an embodiment for dual phase interferometry;

Figure 25a shows an alternative view of the apparatus shown in Figure 25;

Figure 26 shows an apparatus for dual phase interferometry, the apparatus comprising an optical fibre reference beam path;

Figure 27 shows an apparatus for dual phase interferometry, the apparatus comprising an optical fibre reference beam path;

Figure 28 shows an apparatus for dual phase interferometry, the apparatus comprising collection optics to collimate the light scattered at different angles;

Figure 29 shows various arrangements of a spectrograph entrance slit relative to a sample flow;

Figure 30 shows scattering intensity with respect to detector for a sample with relatively large particles, illustrating a case where many of the detectors are not collecting useful information;

Figure 31 shows scattering intensity with respect to detector, for the sample that is shown in Figure 30, in which the relationship between detector and scattering angle has been changed so that the range of scattering angles detected is better matched to the diffraction pattern from the sample; and

Figure 32 shows an emission spectra that includes closely spaced features that would benefit from enhancement of spectral resolution.

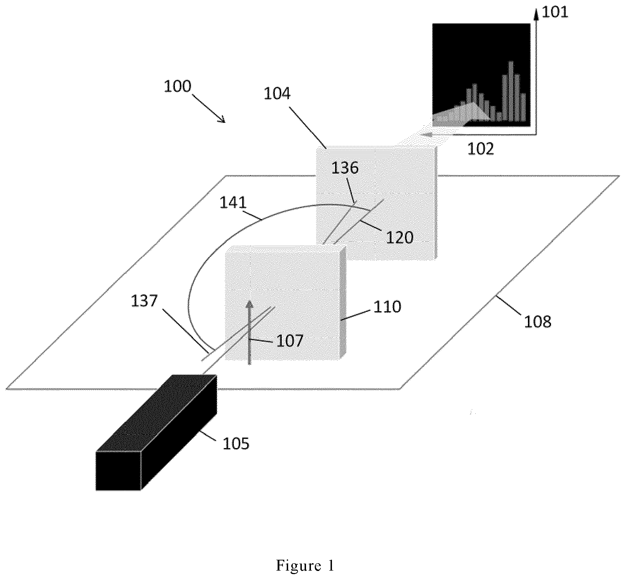

Referring to Figure 1, a prior art instrument 100 for characterisation of particles by light diffraction is depicted schematically. The apparatus 100 comprises a light source 105, sample cell 110 and detector 104.

The light source 105 is typically monochromatic and preferably spatially coherent, so typically comprises a laser (although some instruments comprise an LED light source). The light source 105 creates an illumination beam 120 that illuminates a sample. The interaction of the light beam 120 with particles of the sample result in scattering/diffraction of the light beam 120. The pattern of scattering that is produced is characteristic of the particle size (and/or particle size distribution).

The sample cell 110 supports and/or contains a sample comprising particles suspended in a liquid or gas phase diluent and may comprise a cuvette, flow cell or slide (e.g. for supporting a droplet of sample).

The detector 104 is configured to detect the pattern of scattered light resulting from the interaction of the illumination beam 120 with the particles of the sample, recording the intensity of detected scattered light 101 at several different angles 102. A particle size or particle size distribution can be calculated from the variation in scattering intensity at different scattering angles, for example using Mie scattering theory.

The illumination light beam 120 is typically linearly polarised. In this example, the polarisation orientation 107 is vertical. Scattered light is often detected in a scattering plane 108, which is defined as a plane that includes the illumination light beam 120 in the sample and which is normal to the polarisation orientation 107 of the illumination light beam 120 in the sample. A range of scattering angles 141 can be detected, including forward scattered light 136 (with a component of propagation direction in the same direction as the illumination light beam 120) and backward scattered light 137 (with a component of propagation direction in the opposite direction to the illumination light beam 120).

It is known to employ two light sources, each having a different wavelength. For example, the instrument may include a red laser and a blue LED which illuminate the sample along different optical paths. In order to avoid confusion between scattering at different wavelengths (which may make inversion of the scattering pattern more difficult or impossible), sequential illumination and/or dedicated detectors are used.

In addition to characterising particles based on the pattern of diffracted light, it is also known to characterise particles based on how the intensity of light scattering in a particular scattering direction varies over time. Brownian motion means that particles with a lower hydrodynamic radius produce scattered light that fluctuates more rapidly than particles with a higher hydrodynamic radius.

This type of analysis is referred to as dynamic light scattering (DLS) or photon correlation spectroscopy (PCS). A spatially coherent monochromatic light is typically used in dynamic light scattering and scattered light is detected over a relatively narrow range of scattering angles (e.g. over a range of scattering angles of 5 degrees or less, or 2 degrees or less, so that the q-vector of the scattered light is relatively well defined). A photon counting detector such as an avalanche photodiode is typically employed, which is capable of providing a time history of scattering intensity with high temporal resolution. An autocorrelation is performed to determine a correlogram of the light scattering intensity, and the correlogram processed (e.g. using Cumulants or a non-linear least squares method) to determine a particle size or particle size distribution. As an alternative (but equivalent) to correlation, a frequency domain analysis can be performed (e.g. using Fast Fourier Transform analysis). In some instruments, multiple scattering angles may be detected, and analysis performed on the data from multiple scattering angles (each with well-defined q-vectors). Such analysis may be termed Multi-Angle DLS (MADLS).

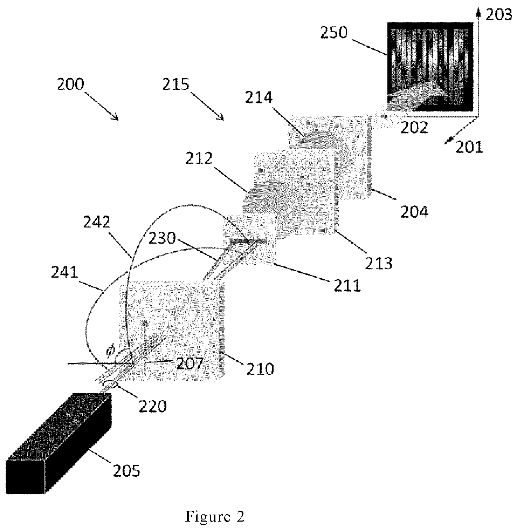

Figure 2 is an apparatus 200 for particle characterisation by light scattering according to an embodiment. The apparatus comprises a multispectral light source 205, sample cell 210 and spectrograph 215.

The multispectral light source 205 (also referred to herein as a polychromatic light source) is configured to provide a polychromatic illuminating light beam 220 with a plurality of wavelengths (for example more than one or more than two), with each wavelength of light combined on a common illuminating beam path through the sample. The multispectral light source 205 may, for example, comprise a plurality of monochromatic light sources (e.g. laser diodes), each having a different wavelength. The light from each monochromatic source may be combined onto a common illuminating beam path, for example using at least one of: a beam splitter, dichroic element, or diffraction grating (for example, in which beams from each light source are incident at different angles, so that the dispersion resulting from diffraction causes the beams to be co-aligned). In other embodiments, the polychromatic light source 205 may comprise a broad spectrum light source (such as an incandescent light or a phosphor coated LED), or multiple overlapping broad spectrum light sources, or a supercontinuum light source (in which a non-linear optical element is used to broaden the spectrum of a pump beam, which may be coherent and originate from a laser).

The polychromatic light source may comprise spectral ranges selected from: x-ray, EUV, NUV, visible, NIR, IR or any combination thereof. The spectral range of the polychromatic light source may comprise wavelengths selected for Raman spectroscopy (e.g. comprising 785nm light), fluorescence detection, photoluminescence and phosphorescent scattering. Where multiple light sources are combined in a single beam, light sources may be co-aligned and optically scaled to present a light source with the same characteristics (e.g. a variance of less than 20% in beam power, beam quality, and beam width between each of the different wavelengths).

The polychromatic illuminating light beam 220 may be linearly polarised, as indicated by the polarisation direction 207 indicated in Figure 2. The polarisation direction 207 is not indicated on all the subsequent embodiments described herein but the same linear polarisation with vertical orientation is used unless stated to the contrary. Other polarisation states can be used in alternative embodiments.

The polychromatic illuminating light beam 220 is incident on the sample cell 210 and produces scattered light 230 from the interaction of the light beam 220 with the sample (that is within or supported by the sample cell 210). The scattered light 230 will include scattered light propagating at a range of different angles to the illuminating light beam 220, over an in-scattering-plane angular range and an out-of-scattering-plane range. A co-ordinate system for scattering angles may be defined by defining an in-plane (or azimuth) scattering angle $\theta$ (between the projection of the scattered light in the scattering plane and the direction of propagation of the illuminating beam) and an out-of-plane (or elevation) scattering angle $\phi$ (between the direction of propagation of the scattered light and the scattering plane). A range of different scattering elevation angles is illustrated for: in-plane scattering 241 and out-of-plane scattering 242.

The spectrograph 215 is arranged to receive scattered light 230 from the sample and to provide output data 250 that records the variation in scattering intensity at a range of different scattering angles for a plurality of wavelengths of the polychromatic illumination beam 220.

The spectrograph 215 comprises: an entrance slit 211, first spectrograph lens 212, dispersive element 213, second spectrograph lens 214 and detector 204.

In this embodiment, the entrance slit 211 is parallel with the scattering plane, so that different locations along the entrance slit correspond with different in-plane scattering angles.

A dispersive element (such as a diffraction grating) 213 is arranged to receive the light from the entrance slit 211, and to disperse the different wavelengths of the scattered light in a direction that is different to the orientation of the entrance slit. Preferably, the direction of dispersion caused by the dispersive element 213 is perpendicular to the orientation of the slit. In this embodiment, the entrance slit 211 samples light at a range of (in-plane) scattering angles, and the dispersive element disperses the different wavelengths perpendicular to the slit 211. The resulting pattern of light includes rows (parallel to the entrance slit 211) that each correspond with the variation in intensity of scattered light with scattering angle for different wavelengths of the polychromatic illumination beam, and columns that each correspond with the variation in intensity of scattered light with wavelength for different scattering angles. This 2D scattering pattern is recorded by the detector 204, which may comprise a 2D array of detector elements (or a plurality of 1D arrays, or any other arrangement of detector elements that enables the spatial sampling required). The output 250 from the detector 204 therefore comprises the variation in scattering intensity 201 over a range of scattering angles 202 for each of a plurality of wavelengths 203.

A processor (not shown) may be configured to receive the output 250, and to determine a particle characteristic (such as particle size or particle size distribution), for example according to Mie scattering theory. The processor may be configured to determine a particle size distribution for each wavelength detected by the detector 204.

In the example embodiment, first and second spectrograph lenses 212, 214 are provided to (respectively) collimate the light at the dispersive element 213 and to focus the light from the dispersive element 213 at the detector 204. This is not essential: for example, a curved reflective diffraction grating may be used to correct aberration and focus the dispersed light at a detector. Any suitable diffraction grating may be used as a dispersion element, such as holographic grating or a blazed grating.

The free spectral range, spectral resolution, angular range and angular resolution (of scattering direction) of the spectrograph 215 will vary if there is a change in magnification by optics within the spectrograph 215, or by optics between the spectrograph 215 and the sample cell 210. The spectral and angular resolution are set by the pitch of the detector elements (in accordance with Nyquist sampling) and the spread of scattering angles at the detector caused by the optics. In embodiments with variable magnification in the optical chain (between the sample cell 210 and detector 204), the spectral and angular resolution and range may be adjusted by varying the magnification. This may be an enabling technology for measurement approaches that can be adjusted, for example: in response to expected sample properties, in response to changes in sample properties during the measurement, or in response to initial measurements performed by the apparatus.

In the context of both diffraction based particle characterisation and dynamic light scattering, different wavelengths of light enable additional data to be obtained about the sample. In the case of dynamic light scattering additional wavelengths of illumination can be considered similarly to additional detected scattering angles, and can be used to reduce measurement uncertainties (and to increase the accuracy of characterisation).

In examples that can detect the polarisation state of scattered light, depolarised dynamic light scattering analysis may be performed, which may comprise comparing scattered light with different polarisation states in order to determine characteristics of the sample (e.g. particle morphology).

Each of the examples described herein may employ particle analysis based on a pattern of diffracted light (Rayleigh scattering, Mie scattering, and/or laser diffraction analysis) or may employ particle analysis based on the variation in scattering intensity with respect to time (photon correlation spectroscopy, dynamic light scattering, multi-angle dynamic light scattering). Some examples may be configured to perform zeta potential analysis of particles (and/or of a surface). Certain examples that are configured for dynamic light scattering may be configured to detect scattering angles of at least one of 173 degrees, 90 degrees and 17 degrees from the illumination axis (with acute angles indicating forward scatter and obtuse angles indicating backward scatter). In embodiments that are configured for dynamic light scattering, a photon counting detector may be employed. In embodiments configured for dynamic light scattering the dynamic light scattering analysis may be performed employing detection angles comprising at least one of: near-axis forward scatter; near-axis backward scatter and side-scatter. Near-axis forward scatter may be defined as at an angle of within 20 degrees of the propagation direction of the illuminating light beam in the sample. Near-axis backward scatter may be defined as at an angle of between 180 and 160 degrees from the propagation direction of the illuminating light beam in the sample. Side scatter may be defined as at an angle of 90 degrees of the direction of propagation of the illuminating light beam in the sample (or at an angle of 80-100 degrees). It will be appreciated that dynamic light scattering is preferably performed based on a well-defined q vector, which means that the range of scattering angles sampled for each nominal scattering angle (e.g. subtended by the detector) must be relatively narrow - for example +-2 degree or +-5 degrees. Each DLS detection angle (or channel) may be configured to detect more than one wavelength of scattered light. Similar to multi-angle dynamic light scattering, the inversion of particle characteristics from a time history of scattering light can encompass the different wavelengths of scattered light to improve the accuracy with which the particles are characterised. Characterisation of zeta potential will similarly benefit from determination based on multiple scattering angles and multiple wavelengths of scattered light. The improvement in signal to noise resulting from multiple detection channels, sampling different scattering angles and/or wavelengths, may be particularly useful in the context of samples with very low electrophoretic mobility (e.g. proteins) and in the context of determining zeta potential for photoluminescent samples. There may also be benefits associated with fitting out the diffusion spectrum which may be more achievable over multiple wavelengths than over a single wavelength.

In a specific embodiment, a detection angle of 90 degrees (plus or minus 20 degrees) may be used, collecting light from a capillary cell (with an internal bore diameter of <1mm or less than 3mm). A polyspectral multi-angle dynamic light scattering analysis may be performed using such an embodiment.

In diffraction based measurements, additional wavelengths can extend the range of particle sizes that can be characterised. It is difficult to arrange for more than two wavelengths of illumination and detection in a conventional instrument. Each monochromatic light source typically needs a bespoke array of detector elements arranged on the scattering plane, which is not straightforward.

In some embodiments one or more angles for DLS detection (e.g. all three of side, forward and backward scatter angles) may be combined with a diffractive spectra-polarimeter that is arranged to detect a relatively broad range of scattering angles approximately centred on a 90 degree scattering angle. For example, the diffractive spectra-polarimeter may be centred on a scattering angle between 80 and 100 degrees, and may be configured to receive a range of scattering angles of at least 20 degrees, or at least 30 degrees.

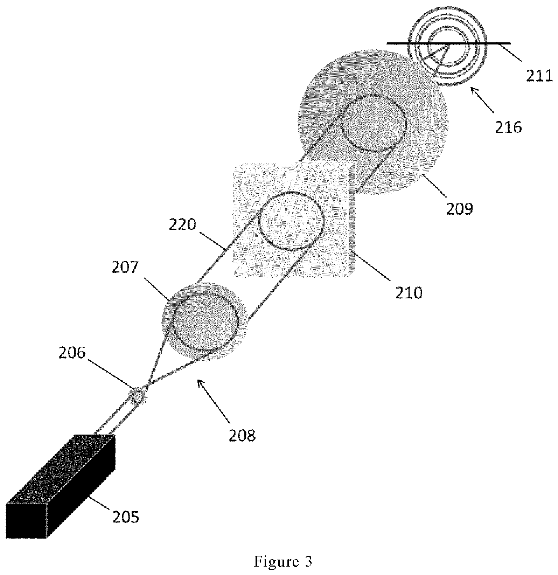

Figure 3 illustrates an example optical arrangement for illuminating the sample cell 210 and collecting scattered light at an entrance slit 211 in more detail. The polychromatic light source 205 in this arrangement is arranged to illuminate the sample cell 210 via a beam expander 208, to produce an expanded beam 220, which may be collimated in the sample cell 210 (as shown) or converging. In this context, a collimated beam in the sample may be termed a Fourier configuration, and a converging beam in the sample may be termed a reverse Fourier configuration.

In the Fourier configuration, a focussing lens 209 is employed with the entrance slit 211 positioned at the focal plane thereof. In the reverse Fourier configuration, the focussing lens 209 may be omitted, and the entrance slit 211 positioned at the focal plane of the final lens element 207 of the beam expander 208. Both Fourier and reverse Fourier configurations map scattering angle in the sample (irrespective of the position in the sample) to position along the entrance slit. The diffraction pattern 216 thereby produced at the entrance slit 211 is schematically illustrated.

In each of the example embodiments, a Fourier configuration, similar to that shown in Figure 3, or a reverse Fourier configuration may be used to illuminate the sample and/or collect scattered light at the entrance slit.

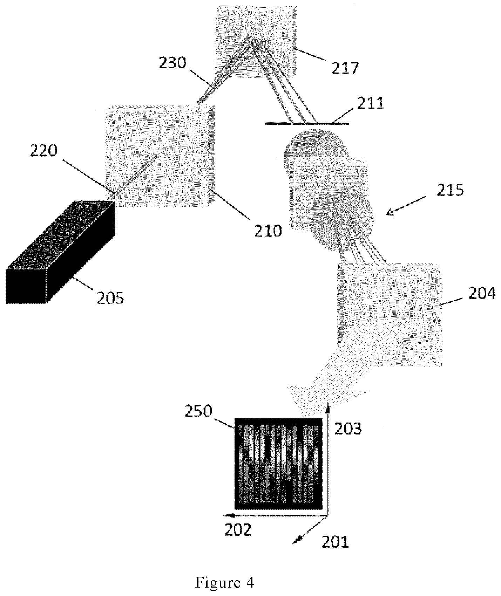

Figure 4 illustrates a further example embodiment, which is similar to that of Figure 2, except that a folded arrangement is used, in which a mirror 217 is provided between the sample cell 210 and the spectrograph 215. This may enable a more compact instrument to be realised, but is not essential. Although a mirror 217 is depicted in many of the

**EP 4 530 603 A1**

subsequent embodiments, this can be omitted.

In the example of Figures 2 and 4, the scattered light 230 intercepted by the entrance slit 211 is sampled for detection, but light scattered in other directions is not sampled (as is clearly shown in Figure 3, for example). This may represent a reduction in the total amount of scattered light sampled when compared with prior art detectors (which typically employ detectors centred on the scattering plane, but covering a significant angular range to either side of the scattering plane, in order to improve light gathering). Increasing the slit width would reduce the spectral resolving power, so an engineering compromise may be required to balance these competing performance criteria (which may be application specific).

In some embodiments, a collection optic (which may comprise a plurality of optical elements) between the sample cell 210 and the entrance slit 211 may be configured to improve the amount of scattered light that is received at the entrance slit 211.

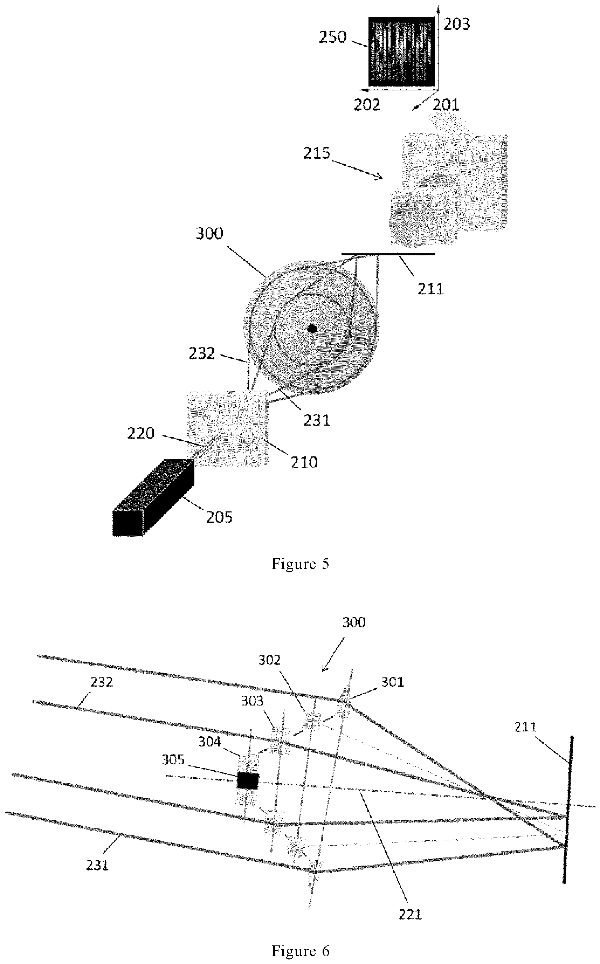

Figure 5 illustrates an embodiment with a collection optic 300 in the form of a faceted optic. The faceted optic is configured to map each of a plurality of rings of scattered light to different positions at the entrance slit 211. Each ring of scattered light comprises a narrow range of different elevation angles (e.g. less than 2 degrees), but a full (or at least >20 degree, or at least greater than 90 degree) range of azimuth angles. In this way scattered light with a low elevation angle 231, regardless of azimuth, is directed to a specific location on the entrance slit 211, and forward scattered light with a moderate elevation angle 232 is directed to a different specific location on the entrance slit 211.

The spectrograph 215 subsequently receives more scattered light, which will improve signal to noise ratio, and therefore the accuracy and reliability of the measurement, which is frequently constrained by noise in a practical context. The implied angle-dependent illumination of the grating may create systematic variability in the spectra across all angles. The analysis of the images obtained from the spectrograph detector 250 may be engineered to correct for these effects. The collection optic and spectrometer may be designed to provide an appropriate dispersion and photometric sensitivity for all scattering angles based on a priori knowledge of the performance of the faceted optic.

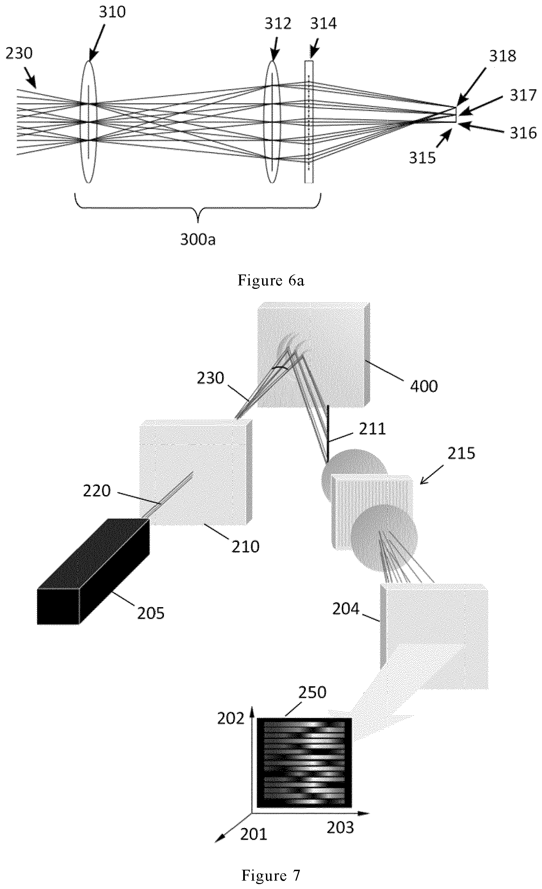

An example collection optic 300 in the form of a faceted optic is shown in Figure 6. In this example, the faceted optic is a transmissive refractive optic, comprising four facets 301-304. Each facet 301-304 is a ring portion of a lens, and the optical axis of each facet is progressively tilted. The tilt with respect to the long axis of the entrance slit 211 increases with the radius of each facet, with the result that the focus of each ring is at a different position along the entrance slit 211. A beam stop 305 is provided at the centre of the faceted optic 300 (or a pinhole that communicates the illuminating beam to a beam stop, or a light source obscuration detector).

In Figure 6a an alternative collection optic 300a is shown, comprising a first lens 310, relay lens 312 and Fresnel lens 314. The first lens 310 produces annular areas of light at the focal plane thereof that correspond with different scattering angles (like those shown in Figure 3 at the entrance slit 211). Relay lens 312 is disposed at the focal plane of the first lens 310 and transforms the scattered light in each annular region into slightly diverging bundle of rays that propagate parallel to the axis of the relay lens 312 (and the first lens 310, which is aligned with the relay lens 312). The Fresnel lens 314 comprises concentric annular zones. Unlike a standard Fresnel lens, where each zone surface is part of a sphere of the same radius and each is cantered on the optical axis, in Fresnel lens 314 each zone has the same spherical radius, but the centre of the spherical radius for each zone is displaced a different amount from the optical axis of the Fresnel lens 314. A central zone of the Fresnel lens 314 lies on the optical axis and so the scattered light incident on the central zone 316 arrives at focal plane 315 of the Fresnel lens 314 at the intersection of the focal plane 315 and the optical axis. Scattered light incident on a middle annular zone of the Fresnel lens is displaced upwards, so the light passing through middle annular zone comes to a focus at point 317. Scattered light passing through the outer zone is displaced further upwards compared to the middle zone, and so the Fresnel lens 314 brings all of the light passing through the outer zone to a focus at point 318. This arrangement allows all of the forward scattered light to be collected at a series of separate points spaced out in a line.

However, if only part of the scattered light is sufficient, embodiments may employ a simple collection lens at focal plane of the first lens 310 (instead of the relay lens 312 and the Fresnel lens 314).

In a further alternative, the optical power of relay lens 312 could be added to the Fresnel lens 314 (thereby dispensing with the separate relay lens 312). The concept of the optical arrangement is easier to explain with the functions of the relay lens 312 and Fresnel lens 314 separate, but the two lenses can be combined in a single Fresnel lens. In Figure 7, a collection optic 300 comprises a faceted optic 400, which is provided in place of the simple plane mirror of the embodiment of Figure 4. The faceted optic performs the same function as the refracting faceted optic of Figure 6, but using reflective optics. In this example, the entrance slit 211 is perpendicular to the scattering plane: since it is the faceted optic 400 that maps the different scattering angles onto the entrance slit 211, the orientation of the entrance slit 211 in embodiments with a faceted optic 400 is relatively arbitrary, because the faceted optic 400 can map the scattered light to an arbitrary orientation of the entrance slit 211.

In other embodiments, a plurality of lenslets (in an array or otherwise) may be used in a free space optical arrangement in place of a faceted optic, to perform a similar function. Collection optics 300 comprising faceted/composite optics 400 (whether reflective or refractive) may be formed in a manufacturing process that comprises 3D printing, or by

9

moulding, or optical quality machining. A flat mirror 217 may also be used in combination with a refracting faceted optic.

In the example embodiments described above, the maximum scattering angle that can be detected is determined by the numerical aperture of any collection optics (between the sample cell 210 and the entrance slit 211) and/or the length of the entrance slit 211. The resolving power of the spectrograph will not generally increase with the length of the slit, so it is desirable to keep the entrance slit relatively compact.

In certain embodiments, supplemental collection optics may be used to direct high scattering angles onto the entrance slit 211.

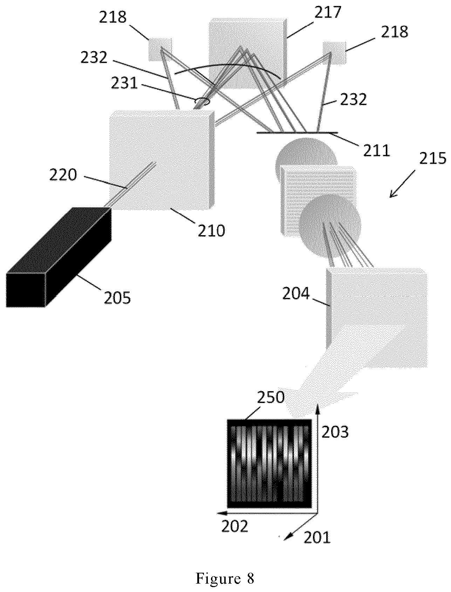

Figure 8 illustrates an example of a free-space implementation, in which reflective supplemental collection optics 218 are employed to direct high-angle forward scattered light to specific locations at the entrance slit 211. Further optics may be provided in such an implementation (not shown) to focus the scattered light at the entrance slit 211. In certain embodiments, refracting lenses may be provided in addition to, or as an alternative to the reflective supplemental optics 218.

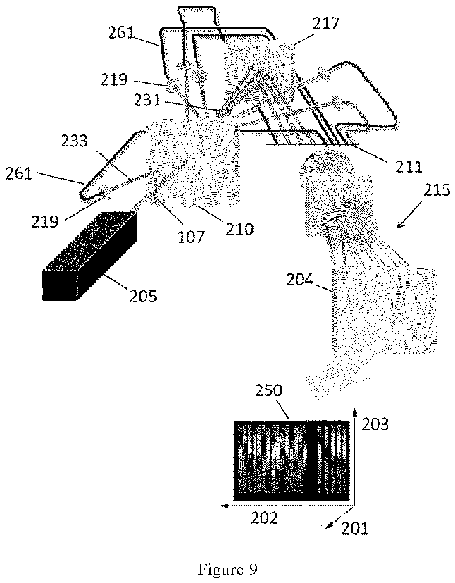

Figure 9 illustrates an embodiment in which supplemental collection optics 219 are coupled to the entrance slit 211 by optical fibres 261. In the example of Figure 9, a collection lens 219 is arranged to collect light scattered at high forward angle, and to couple the scattered light to an optical fibre 261. The optical fibre 261 in turn couples the high angle forward scattered light to a specific position on the entrance slit 211. In this embodiment, multiple supplemental collection optics/lenses are provided. Such supplemental collection optics 219 may include collection optics for mapping forward scattered light at angles of at least 25 degrees to the propagation direction of the illumination beam in the sample, (or at angles of at least 45 degrees, or at least 90 degrees). In this example a back scattering direction is collected by a lens 219 and fibre 261 coupled to a position on the entrance slit 211.

The use of collection optics (which may include supplemental collection optics) results in increased design freedom of the mapping of scattering angle to position along the entrance slit 211. The entrance slit 211 and spectrograph 215 can subsequently be made more compact and with reduced cost. The resolving power of a spectrograph does not scale with the diameter of the spectrograph optics and without collection optics additional costs could be incurred to collect more light but with no attendant improvements in spectral resolving power.

Optical fibre coupling of scattered light to the entrance slit 211 may comprise single fibres, multicore fibre and/or fibre arrays (each with or without fibre coupling lenses or collection lenses, which may be used to gather scattered light over a wider area and focus it into the fibre).

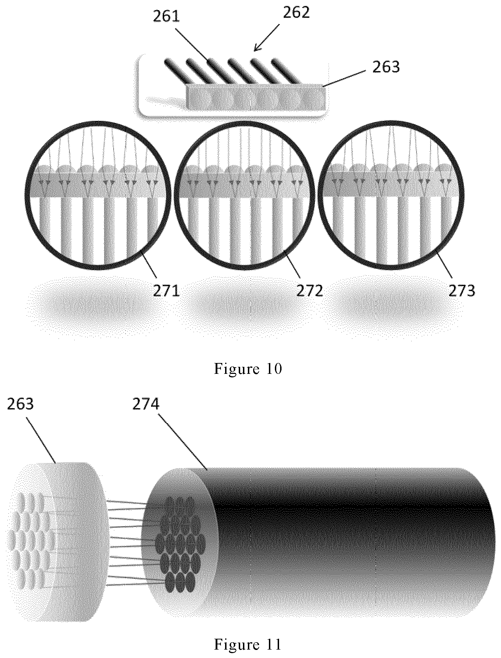

Figure 10 illustrates an example embodiment in which a 1D lenslet array 263 (which may be monolithic, as depicted) couples scattered light to a 1D array 262 of fibres 261. The lenslets may be configured to receive focussed 271, collimated 272 or diverging 273 light, depending on the optical configuration of the preceding collection optics for the scattered light. Each lenslet may receive light scattered at a single angle (or narrow range of angles, such as less than 1 degree). The array of lenslets may be curved or flat. A curved lenslet array may improve light collection over a flat array, but with concomitant increases in complexity and cost.

Figure 11 illustrates an example embodiment in which light is fibre coupled to the entrance slit by a fibre array or multicore fibre 274. The multicore fibre or fibre array 261 comprises a 2D array of fibres and a 2D array of lenslets 263, which will collect light scattered in and out of the scattering plane (i.e. including scattered light with a non-zero azimuth angle).

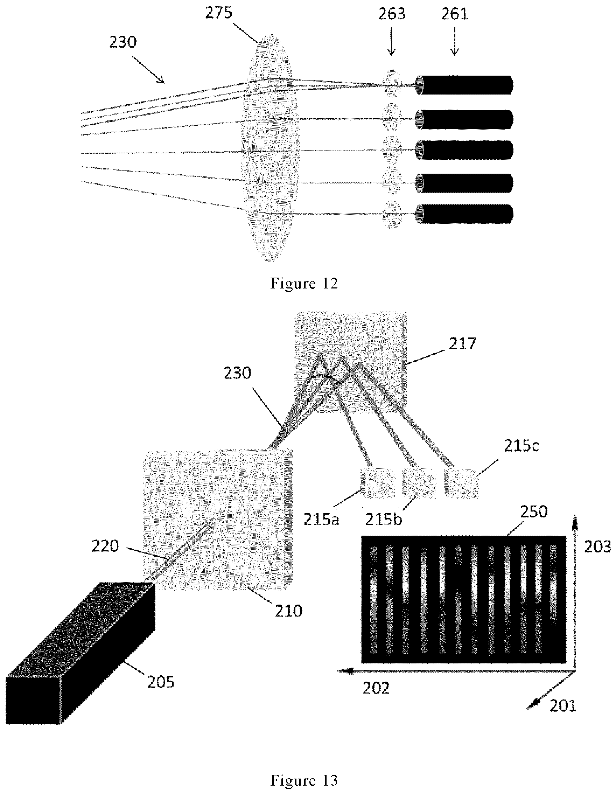

Figure 12 illustrates an example embodiment in which a collection lens 275 is employed which is telecentric with respect to the image formed at the fibres 261, with the result that the numerical apertures of the fibre optics 263 are well matched to the scattered light 230 that they receive over a wide angular scattering range,

In the embodiments discussed above, a single spectrograph 215 receives a range of scattering angles at different positions of an entrance slit 211 (i.e. each position on the entrance slit 211 corresponds with a different scattering angle), but this is not essential. In some embodiments a plurality of spectrographs may be provided that each receive a narrow range of scattering angles (e.g. a range of 2 degrees or less, substantially corresponding with a single scattering angle). Some embodiments may combine both approaches, comprising spectrometers with an entrance slit that receives a broad range of scattering angles (e.g. greater than 10 degrees) and spectrometers that receive a narrow or single range of scattering angles (e.g. less than 2 degrees).

Recent advances in miniaturised integrated spectrometers provide a number of suitable miniature spectrometer technologies that may be suitable for use a spectrally resolving single angle detectors (e.g. subtending a range of scattering angles of +/- 2 degrees or less, or +/- 5 degrees or less). Such miniature spectrographs may comprise at least one of: stationary-wave integrated Fourier transform spectrometry; photonic crystal spectrometry; arrayed waveguides; array waveguide grating; Lippman spectrographs; Fabry-Perot cavities; and/or arrays of wavelength selective components. The miniature spectrograph may be contained within a volume of 8 cm cubed (e.g. 2x2x2 cm) or less. The miniature spectrograph may have a length of 2 cm to 10 cm along each side.

Figure 13 illustrates an example embodiment in which a polychromatic light source 205 illuminates a sample cell 210 with a polychromatic illumination beam 220 (as previously described). Scattered light 230 is received by miniature spectrographs 215a-c (in this example via a mirror 217, but this is not essential), with each spectrograph 215a-c receiving light scattered over a relatively narrow range of angles (e.g. substantially corresponding with a single scattering angle detector in a prior art scattering instrument). Since each detector is a spectrograph 215a-c, the scattering of different wavelengths of the illumination beam is resolved. The combined signals from the spectrographs 215a-c can be combined to produce scattering data 250 that is analogous to that obtained in other embodiments described herein (i.e. comprising a variation in scattering intensity for a plurality of wavelengths over a plurality of scattering angles), with similar advantages.

The scattered light 230 arising from interaction with the illuminating beam 220 and the sample is of relatively low intensity in comparison with the illuminating beam 220. It can therefore be advantageous to separate the illumination beam 220 from the scattered light 230 so that the illumination beam 220 is not admitted to, or does not affect (e.g. by saturating detectors), detection of the scattered light 230 by the spectrograph 215. There are a number of ways in which this can be achieved.

In some embodiments, the entrance slit 211 to the spectrograph 215 may include an obscuration element that absorbs, guides, backscatters, reflects or otherwise manages the illumination beam away from the entrance slit 211 so that the illumination beam 220 does not enter the spectrograph 215.

In some embodiments the scattered light 230 may be collected slightly outside the scattering plane (typically at less than 10 degrees out of plane), so that the illuminating light beam bypasses the spectrograph detector(s). With an inversion of the scattering data by Mie theory, this out-of-plane scattering angle can be taken into account. In embodiments that employ simpler scattering theory and/or applications where error margins are not critical, the relatively small out-of-plane scattering angle may be simply ignored.

In some embodiments the illumination beam 220 may be allowed to enter the spectrograph 215 (e.g. by passing through the entrance slit 211), and a beam stop may be provided within the spectrograph 215 to intercept the illumination beam 220. Convenient locations for such a beam stop include at a secondary or tertiary focal plane of the spectrometer, or in the detector plane (i.e. with a pinhole in the detector and a beam trap). In some embodiments a split spectrograph may be provided, where each detector captures a separate range of scattering angles and the illuminating beam passes between detectors.

In some embodiments, multiple entrance slits may be employed to admit light to a spectrograph. Such entrance slits may be placed strategically to analyse portions of the scattered light field. For example, the entrance slits may be disposed in a 2-dimensional pattern with appropriate angles with respect to the optical axis (defined by the path of the illumination beam in the sample) or may be disposed in parallel as a vertically stacked array. In all cases the recorded spectra (from the different entrance slits) would need to be separated on the detector in order to tell them apart, so that the placement of vertical slits in the spectrograph image plane, as a specific example, would need to be separated by more than the free-spectral range.

In some embodiments, the illumination beam 220 may be modified to enable detection of light scattered in the same direction as the illumination beam 220 (i.e. zero scattering angle), for example, in accordance with WO2018/069024, in which an optical element is provided between the light source 205 and sample cell 210, the optical element configured to modify light from the light source to create a modified beam. The modified beam interferes with itself to create an effective beam in the sample along an illumination axis and diverges to produce a dark region along the illumination axis that is substantially not illuminated at a distance from the sample cell. The entrance slit 211 to a spectrograph 215 (or a miniature spectrograph) may be placed at the distance where the dark region is located, thereby detecting light scattered at or near zero scattering angle (e.g. including light scattered at less than 10 degrees, less than 5 degrees or less than 2 degrees). A processor may be configured to determine a particle size or particle size distribution from the measurements obtained by the spectrograph by performing a dynamic light scattering analysis or a static light scattering analysis based on a scattering angle defined by the angle between the scattering axis and the illumination axis of the effective beam.

The above embodiments have followed a conventional diffraction detection approach, in which light is detected in the scattering plane (or with low azimuth angle e.g. <10 degrees). In some contexts, it can be useful to detect light scattered out-of-plane: i.e. with a high azimuth (e.g. > 45 degrees, such as 90 degrees). For example, it may be beneficial in characterising smaller particles to have access to out-of-plane scattering data. Where particles approach the Rayleigh limit (i.e. with diameter 1/10 the wavelength of the illumination beam or less), it becomes more difficult to characterise them via diffraction based methodologies.

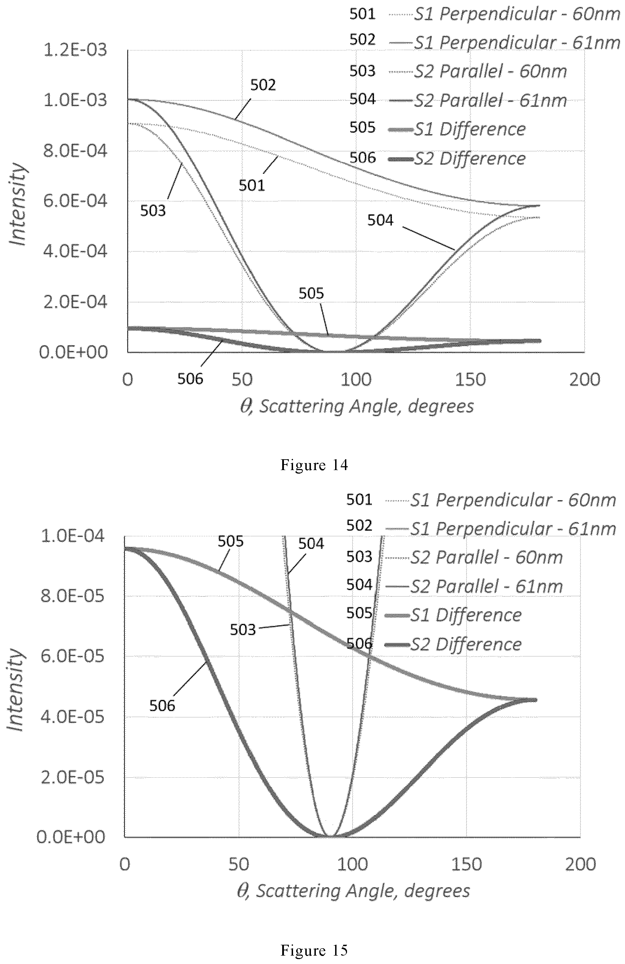

Figure 14 shows theoretical scattering intensity over a range of scattering angles from 0 to 180 degrees, according to Mie scattering theory, from 60nm and 61nm latex particles (RI=1.45) in water (RI=1.33), illuminated by a 632.8nm wavelength laser. Scattering in planes perpendicular to the polarisation orientation (i.e. conventionally, "in-plane") and parallel to the polarisation orientation (conventionally, "out-of-plane") are shown, and the difference in scattering between the two particle sizes for each orientation of scattering plane. The graph includes variation in intensity with respect to scattering angle for:

    501 scattering in a plane perpendicular to the polarisation orientation, for 60nm particles;
    502 scattering in a plane perpendicular to the polarisation orientation, for 61nm particles;
    503 scattering in a plane parallel to the polarisation orientation, for 60nm particles;

504 scattering in a plane parallel to the polarisation orientation, for 61m, particles;
505 the difference in scattering from 60nm and 61nm particles, in a plane perpendicular to the polarisation orientation;
506 the difference in scattering from 60nm and 61nm particles, in a plane parallel to the polarisation orientation.

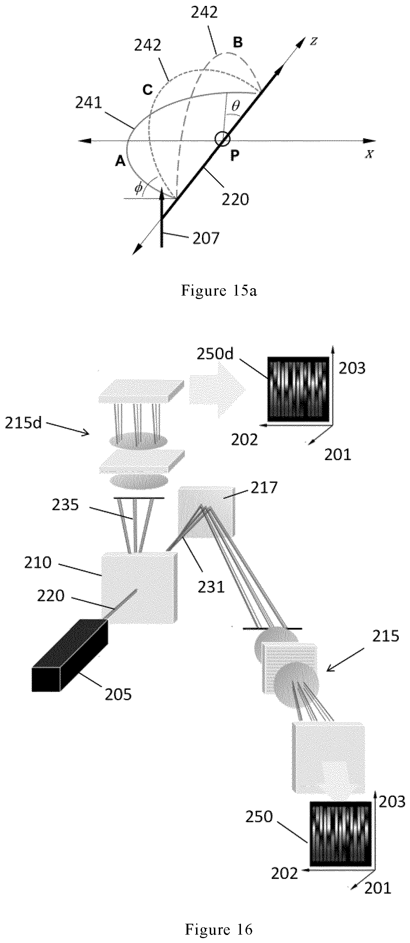

The difference plots are reproduced in Figure 15, which has an expanded y-axis, rendering the differences more clearly.

It can be seen that there is more difference between the scattering from 60nm and 61nm particles in out-of-plane scattering (i.e. in a plane that is parallel to the orientation of the polarisation of the illumination beam). In some embodiments, a spectrograph is arranged to receive light scattered at a range of elevation angles in a plane that has a relatively high azimuth angle, such as 90 degrees. This may improve resolution of characterisation, in particular for particles that are below the Rayleigh limit.

Figure 15a illustrates scattering angles in (azimuth, $\theta$) and out (elevation $\phi$) of plane. In case **A** the scattering angles $\theta$ are all in the scattering plane ($\phi = 0$ radians), orthogonal to the laser polarisation direction 207. In case **B** the scattering angles are in a plane of $\theta$ that is at an angle $\phi = \dfrac{\pi}{2}$ radians. Case **C** is intermediate to cases **A** and **B** where $\phi \in [0, \dfrac{\pi}{2}]$.

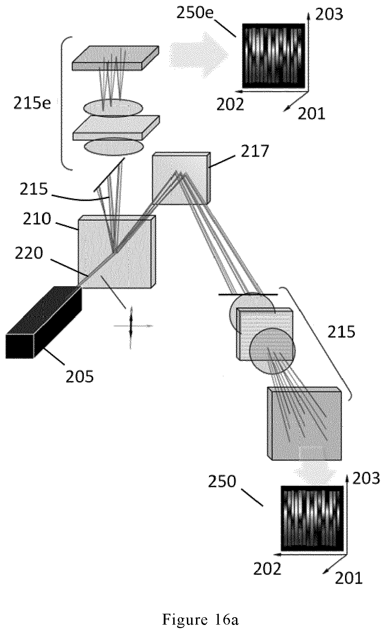

Figure 16 illustrates an embodiment in which a range of scattering elevation angles are detected in the scattering plane (case A), and in a plane perpendicular to the scattering plane (i.e. parallel with the orientation of polarisation of the illuminating light beam 220). The apparatus of Figure 16 comprises a polychromatic light source 205 that illuminates a sample cell 220 with a polychromatic light beam 220, similar to previous embodiments. A spectrograph 215 is provided with an entrance slit parallel to the scattering plane, which receives light scattered at a range of elevation scattering angles at low azimuth (so in-plane, or nearly in-plane). A further spectrograph 215d is provided that detects light scattered at a range of scattering elevation angles $\phi$, but with a high (single, or narrow range of) azimuth angle $\theta$, for example of 90 degrees (with a range of 5 degrees or less, or 2 degrees or less). The further spectrograph 215d comprises an entrance slit that is perpendicular to the propagation direction of the illuminating light beam 220 and parallel to the scattering plane.

Each of the spectrographs 215, 215d produce data 250, 250d that provide the relationship between scattering intensity and scattering angle at a range of different wavelengths. The combination of information from both spectrographs enables improved characterisation of particles (as explained with reference to Figures 14 and 15).

Figure 16a illustrates an embodiment in which a range of scattering elevation angles are detected in the scattering plane (case A), and in a plane perpendicular to the scattering plane (i.e. the plane of detected scattering angle parallel with the orientation of polarisation of the illuminating light beam 220 - case B). The apparatus of Figure 16a comprises a polychromatic light source 205 that illuminates a sample cell 210 with a polychromatic light beam 220, similar to previous embodiments. A spectrograph 215 is provided with an entrance slit parallel to the scattering plane, which receives light scattered at a range of azimuth scattering angles at low (or zero) elevation (so in-plane, or nearly in-plane). A further spectrograph 215e is provided that detects light scattered at a high scattering elevation angles $\phi$ (e.g. at or near $\phi = \pi/2$), over a range of azimuth angle $\theta$. The further spectrograph 215e comprises an entrance slit that is parallel to the propagation direction of the illuminating light beam 220 and parallel to the scattering plane.

Each of the spectrographs 215, 215e produce data 250, 250e that provide the relationship between scattering intensity and scattering angle at a range of different wavelengths. The combination of information from both spectrographs enables improved characterisation of particles (as explained with reference to Figures 14 and 15).

Some embodiments may combine aspects of both embodiments of Figure 16 and 16a, so that information about a wide range of scattering angles (in azimuth and elevation) are detected by the spectrometers.

WO2023/285841 discloses that a principle component analysis based approach can be used to reduce laser diffraction light scattering data from monodisperse samples to provide an estimate of both the particle size and particle refractive index. That work was based on a monochromatic measurement but could be significantly improved by employing Mie scattering data comprising a range of wavelengths from identically the same sample - which is enabled by the present disclosure.

In particular there are instances, for example, where the reduction to size and/or refractive index is ill-posed, and the additional data provided from polyspectral (and optionally multi-polarisation state) data collected simultaneously from the same sample would provide significant advantages in analysis. Examples of techniques that may benefit from this include bespoke reductions based on regression, principal component analysis, etc.

Scattering from some materials can result in a change in the polarisation state of the scattered light (with respect to the polarisation state of the illuminating light beam). Anisotropy in the particles of the sample (e.g. in composition and shape) and multiple scattering can both lead to polarisation changes in the scattered light. It therefore follows that particle anisotropy and multiple scattering can, to some degree, be analysed if the polarisation of the scattered light is detected.

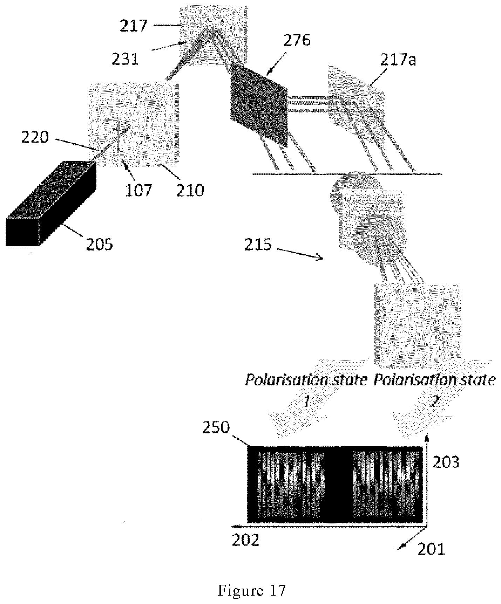

In some embodiments, the particle characterisation apparatus may comprise a polarisation selector. Figure 17 illustrates an example of an embodiment in which a polarisation selector 276 is provided between the spectrograph, which splits the scattered light into a first polarisation state and a second polarisation state, and maps a range of scattered angles in each of the first and second polarisation state onto positions at the entrance slit of the spectrograph 215. Apart from the inclusion of the polarisation selector 276, this embodiment is otherwise similar to the embodiment of Figure 4.

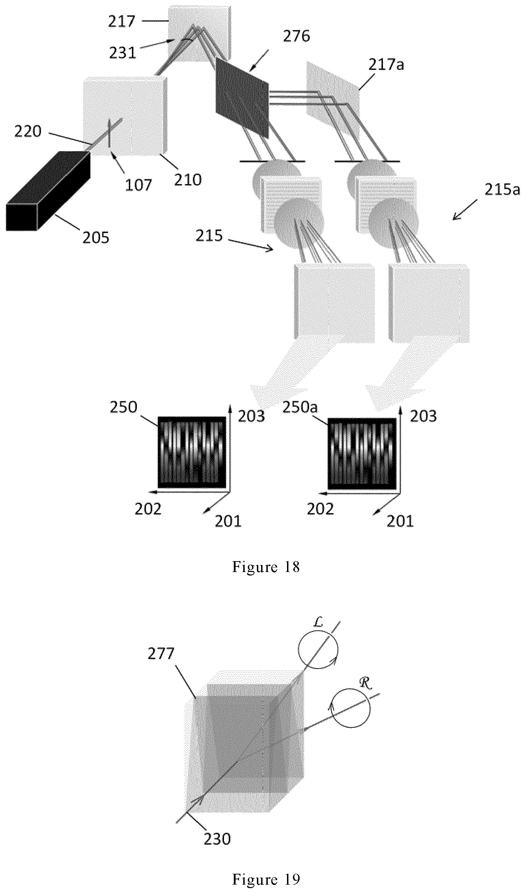

In a different embodiment, such as that shown in Figure 18, the different polarisation states may be provided to different spectrographs 215, 215a. In each case, the output data 250, 250a includes the variation in scattering intensity with respect to scattering angle for more than one wavelength for each of a first and second polarisation state. In some embodiments, the first and second polarisation state may respectively be right hand polarisation and left hand polarisation. In other embodiments, the first and second polarisation state may be vertical and horizontal linear polarisation states (e.g. parallel and perpendicular to the linear polarisation of the illumination beam). In some embodiments, more than two polarisation states may be sampled, for example to enable a full Mueller Matrix representing the polarisation state of the scattered light to be determined.

The apparatus may be configured to determine a degree of multiple scattering using the scattering information obtained for the first and second polarisation state, and may be configured to provide feedback to a user regarding appropriate concentration levels for the sample, and/or be used to prompt or inform corrective processes such as auto-dilution or auto-titration of additives to encourage or discourage accretion or agglomeration, for example.

The polarisation selector 276 may comprise any component capable of separating different polarisation states in the scattered light, including (but not limited to): a Fresnel prism, linear polarisers (such as wire grid polarisers or dichroics, and photo-elastic modulators. Depending on the optical collection scheme and type of spectrograph arrangement (e.g. according to any of the previous embodiments), light with the different polarisation states is provided to separate spectrometers, detectors or separate locations on the entrance slit or slits. The specific rotary power (radians per optical depth) and/or retardation of the sample may be determined from the detected light and the proportions of the polarisation states of the scattered light.

In some embodiments a polarisation selector 276 may be moveable into and out of the scattering detection path. For example, a single spectrograph may be provided that can receive light without polarisation analysis, with a polarisation selector configured to provide a first polarisation state to the spectrograph, or with a polarisation selector configured to provide a second polarisation state to the spectrograph. For example, a filter wheel may be provided that comprises different types of polarising filter with different positions of the filter wheel facilitating different types of analysis.

Embodiments that detect a range of scattering angles for each of plural wavelengths and each of several polarisation states may be termed a diffractive spectra-polarimeter. Diffractive spectra-polarimeters may detect an ensemble of particles simultaneously, but in a time-resolved manner, to inspect the time-evolution of the ensemble, or detect a stream of single particles, also part of an ensemble, but where the instrument operates at a detection rate commensurate with the characterisation of single particles within the entire ensemble. There are currently no single particle resolved particulate diffractive spectra-polarimeters that can characterise single particles at the nanoscale.

In a preferred embodiment of Figure 17, the illuminating light 220 would be vertically polarised and a 'non-crossed' (vertical) polariser at the spectrograph 215 would enable measurement of scattered light with a polarisation direction in the same direction as the illuminating light beam 220, and a 'crossed' (horizontal) polariser would enable measurement of scattered light with a polarisation direction perpendicular to the polarisation of the illuminating light beam 220.

Example applications for diffractive spectra-polarimetry include the measurement of the specific rotary power (radians per millimetre of optical depth) of the ensemble sample. A background measurement may be taken from the dispersant only (which would include the response of the instrument) to be subtracted from the sample scattering. Additionally, inferences regarding the optical activity or optical anisotropy of the particulates in the sample may be made.

Regarding the basis of the polarisation measurements in Figure 17, it is possible to detect more than one orthogonal (*x* or *y*) linear polarisation state by having the light source (linear) polarisation state at an angle with respect to the plane of the instrument, which may be defined as the plane that is parallel and coincident with the entrance slit of the spectrometer 215 and by inference, parallel to the ruling of the grating within the spectrometer. For example, if the light source 205 polarisation was at 45° or 135° then equal intensity *x* and *y* linear polarisations would illuminate the sample.

In some embodiments, the polarisation state of the illuminating light and/or the polarisation states selected for measurement may not be limited to linear polarisation states. The full state of polarisation of any light beam may be decomposed into two, -*L* and -*R*, circularly polarised component states.

By way of illustration, Figure 19 illustrates a Fresnel prism 277, from which left circular and right circular polarised light components of the scattered light 230 are refracted in different directions.

## Mie scattering ellipsometry (MSE)

Laser diffraction is able to reproduce a particle size distribution from the distribution of intensity of scattered light at different scattering angles (when illuminated by a monochromatic, spatially coherent light source). However, an estimate of the particle (and dispersant) refractive index (RI) is required for this. Traditionally this refractive index has been obtained by requesting that the user supply it. This process is manageable for samples that are known and have a well-characterised refractive index, but variations in RI are known to exist by geographical location for some minerals and many materials do not have well accepted values. For spherical, monodisperse samples, it is possible to use principle component analysis to simultaneously derive the particle size and refractive index (see WO2023/285841). It is possible to measure the particle refractive index and other quantities associated with the particle morphology and dispersion using Mie scattering ellipsometry (MSE), according to certain embodiments.

Single scattering requires that particle dispersions are sufficiently dilute such that substantially all light reaching the detector is scattered singly from a particle, from the illuminating beam and is not multiply scattered, where light impinging on a particle in the dispersion may come from some combination of the illuminating light source and from other particles. Multiple scattering starts to occur as the sample concentration increases and for a sufficiently concentrated sample, little or no single scattering is left to reach the detector. MSE provides an estimate of the polarisation state of the light scattered from a particulate sample. The polarisation state of the light scattered from dispersed, single scattering particulate samples may be described using the ellipsometric quantities, tan $\Psi$ and $\Delta$.

For single, spherical particles that are of homogenous composition

$$tan\Psi.\,exp(i\Delta) = \frac{S_p}{S_s} \qquad (1)$$

where $S_p$ and $S_s$ are elements of the scattering matrix defined using the particle size, refractive index, and scattering angles. However, for the more general case, when the particle characteristic distribution (size, RI, morphology, etc.) is polydisperse, some of the polarised light illuminating the sample is depolarised by the sample and recourse to the Stokes vector and Mueller matrix formalism is needed to describe the polarisation state of the scattered light. In this case:

$$\begin{pmatrix} I \\ Q \\ U \\ V \end{pmatrix} = I. \begin{pmatrix} 1 \\ -cos(2\Psi) \\ \mu.\,sin(2\Psi)cos(\Delta) \\ \mu.\,sin(2\Psi)sin(\Delta) \end{pmatrix} \qquad (2)$$

where,

$\mu$ is the degree of coherence in the scattered light

$I$ is the total intensity of the scattered light

$Q = I_0 - I_{90}$ is the difference in intensities between the linearly polarised components of the scattered light with polarisation vector parallel to the scattering plane and perpendicular to the scattering plane

$U = I_{+45} - I_{-45}$ is the difference in intensities between the linearly polarised components of the scattered light with polarisation vector at +/-45 degrees to the scattering plane

$V = I_{rcp} - I_{lcp}$ is the difference in intensities between the right circular polarised component of the scattered light and the left circular polarised component of the scattered light.

and

$$\Psi = -\frac{1}{2}cos^{-1}\left(\frac{Q}{I}\right) \qquad (3a)$$

$$\Delta = -tan^{-1}\left(\frac{V}{U}\right) for\ U \geq 0\ or\ 180^o for\ U < 0 \qquad (3b)$$

The degree of coherence $\mu$ cancels in equation (3b), leaving the estimate of the ellipsometric quantities $\Psi$ and $\Delta$ independent of the degree of coherence. Data for evaluating both equations (3a) and (3b) can be obtained via the various specific embodiments described herein.

Particle refractive index can be determined from the ellipsometric quantities, tan $\Psi$ and $\Delta$ obtained from a single scattering angle measurement (e.g. 90 degrees). Generally, significant numerical constraints and an initial guess may be needed in order to achieve this. Potentially a more precise and accurate estimate for particle refractive index can be extracted from tan $\Psi$ *vs* scattering angle and $\Delta$ *vs* scattering angle using a Mie scattering mathematical reduction. A stepwise polyspectral measurement of scattering can be used to resolve ambiguity between changes in particle size and refractive index.

A Brewster angle exists for Mie scattering ellipsometry at a scattering angle of 90 degrees resulting in a higher variation in tan $\Psi$ and $\Delta$ with scattering angle and this why this angle may be preferred for MSE measurements; however, it is also possible to perform Mie scattering ellipsometry at higher or lower scattering angles.

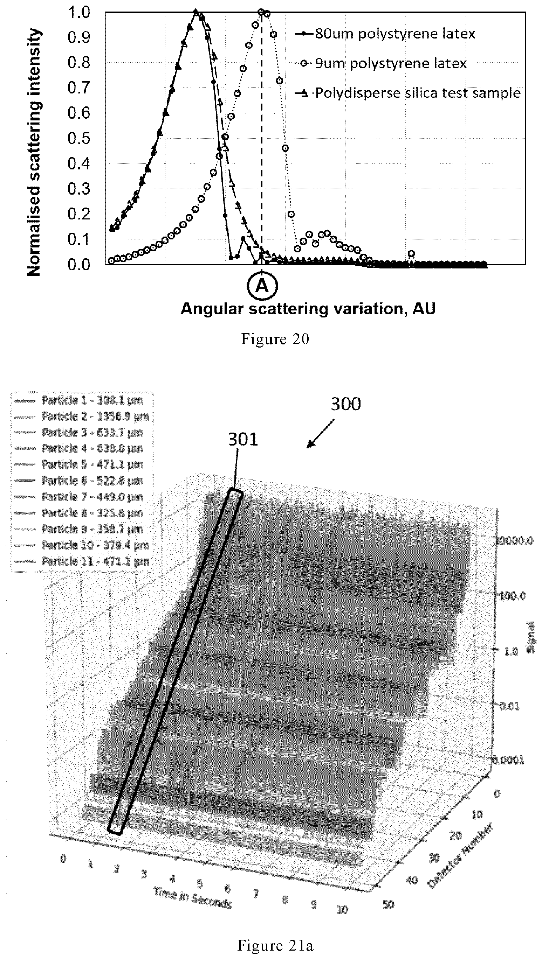

A process-based instrument may be configured to measure only the same, known, particle size distribution(s) from a known material with a known RI, optical spectrum characteristic, etc. However, a general purpose laboratory instrument is likely to be expected to characterise unknown samples. Referring to Figure 20, if a fixed Mie scattering detection angle was placed at point (A) in Figure 20 to optimise the scattered signal from a 9.0 $\mu$m polystyrene latex, then very little signal would be collected from either the 80.0 $\mu$m polystyrene latex or the polydisperse silica sample shown.

There are numerous applications of MSE including the simultaneous characterisation of size, refractive index, and particle morphology which include dynamic processes such as nucleation, aggregation and agglomeration; changes in solvent structure at and around the particle surface with changes in the solvent chemistry using the shift (from 90 degrees) of the MSE Brewster angle, temperature, etc., all possible down to nanoscale particle sizes well below the resolution of dynamic imaging, for example.

Light scattering from an arbitrary sample will depend on a characteristic distribution of the sample (size, RI, internal morphology, aggregation or agglomeration state, solvent structure at and around the particle, etc.) and the particle characteristic spectra (e.g. material composition, fluorescence, etc.). For an arbitrary sample, these will all be unknown, so that a single scattering angle, single wavelength measurement system is not appropriate for the general case (where arbitrary samples are to be analysed) and particularly for time-resolved measurements which are not compatible with step-wise (angle, wavelength, etc.) instruments (i.e. instruments which use sequential sampling at different scattering angles and different wavelengths).

Selecting a single detection angle to match the scattering pattern of the sample can be automated on the basis of angular scattering data recorded from the sample. The simultaneous detection of scattering intensity at multiple scattering angles and multiple wavelengths is an important feature of embodiments, providing significant advantages such as enabling fitting across multi-spectral data to remove ambiguity associated with non-uniqueness of the ellipsometric quantities for simultaneous changes in particle size and particle refractive index (for example) which would be present in single wavelength time-resolved measurements of an arbitrary sample.

The data required to analyse MSE quantities is encoded in the polarised component of the scattered light, so even though the Stokes Vector and Mueller matrix formalism has been presented, it is also possible for the schemes presented herein to be applied to an instrument in which the basis for analysis is the Jones formalism, which only describes the fully coherent case.

There are two primary families of diffractive-spectra-polarimeter schemes that can be used to collect time-resolved MSE and LD data that either i) measure the Stokes (or Jones) vector quantities sequentially in time, or ii) measure Stoke (or Jones) vector quantities simultaneously by splitting the amplitude of scattering between different detectors.

Sequential stokes vector element characterisation for MSE

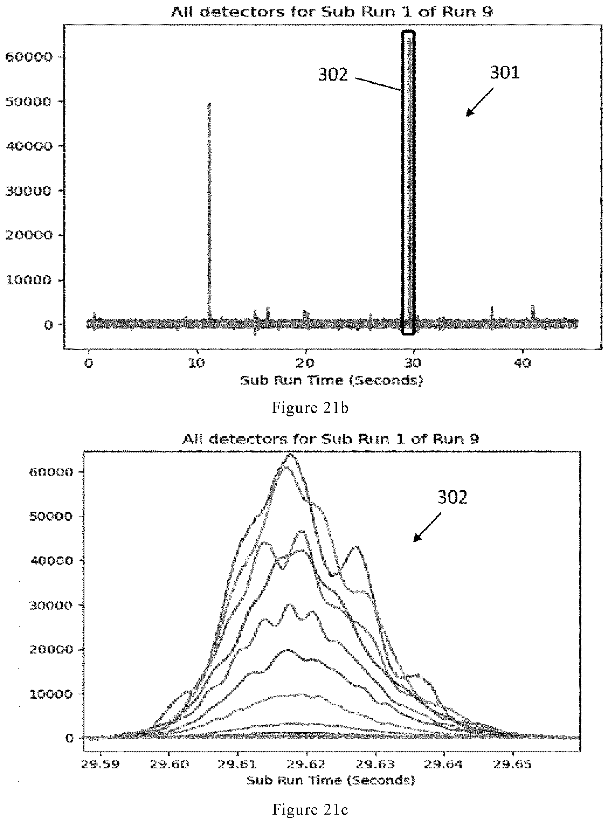

Figures 21a, 21b and 21c show a scattered light signal from a single particle as part of an adaptive laser diffraction measurement. The data obtained over 10 seconds is shown in Figure 21a, with the time section 301 shown in more detail in Figure 21b. In Figure 21b a time section 302 is indicated, which is shown in more detail in Figure 21c. The individual particle scattering at different detectors can clearly be seen in Figure 21c, from which Mie scattering theory can be used to derive the particle size.

The residence time of the particle in the beam is ~ 30ms (FWHM) allowing for approximately 2-6 measurements of each pair of ($\Psi,\Delta$) as the particle passes. The signal to noise ratio in this measurement could be improved by recording the instrumental background either side of the sample peak and then removing it from the ellipsometric signal and by instrumental improvements such as the use of photon counting imaging arrays in the spectrometer and/or using a brighter light source. For reference, the light source used to record the data in Figure 21a-c was a 4 mW, ~1 mm $1/e^2$ diameter laser beam expanded to a $1/e^2$ of ~ 20 mm with scattering from a 400 micron silica glass bead particle, so there is considerable room to increase the signal from single particles of smaller sizes and/or lower refractive index.

For the case of ensemble light scattering, it is not usual for ~100s of particles to be resident in the expanded beam at any one time, thereby improving the potential signal to noise further when providing an ensemble estimate of quantities derived from the spectra-polarimetric data, such as, but not limited to, particle size and particle refractive index via laser diffraction and Mie scattering ellipsometry, respectively.

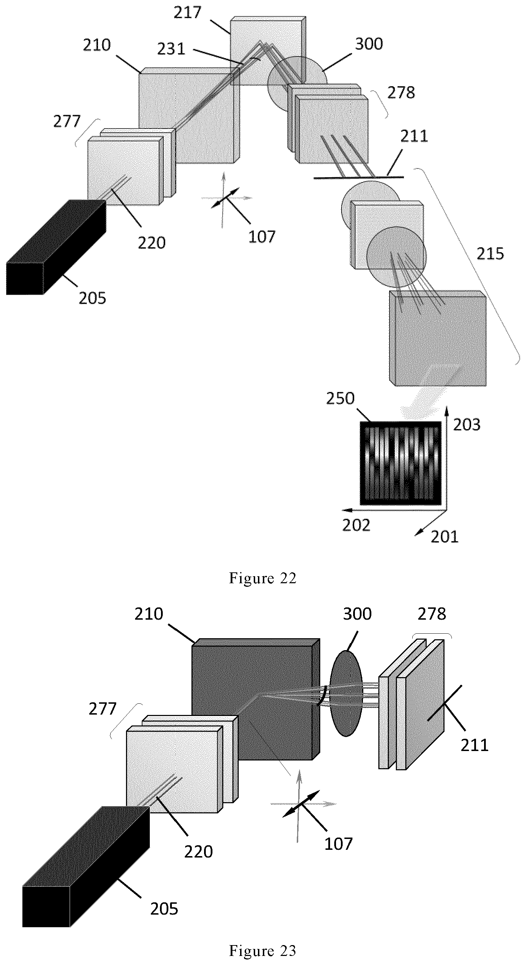

Figures 22 and 23 illustrate example embodiments that comprise an adjustable polarising illumination filters 277 and/or an adjustable polarising detection filter 278.

A polychromatic light source 205 illuminates a sample in a sample cell 210 with an illuminating light beam 220. The sample comprises particles suspended in a diluent, and scattered light arises from the interaction of the illuminating light beam 220 with the particles. The scattered light is reflected from optional mirror 217 and sampled by an entrance slit 211 of a spectrometer 215. The entrance slit 211 in Figure 22 is arranged to receive light scattered at low elevation angles (i.e. in or within 5 degrees of the scattering plane, here defined with reference to a vertically polarised illuminating light beam) over a range of scattering angles (e.g. from low angles at or near zero degrees, up to higher angles such as 10 degrees or 20 degrees). Each portion of the entrance slit 211 maps to a specific range of scattering angles. The light entering the spectrometer 215 is dispersed. The spectrometer comprises an array detector that resolves scattering at both a plurality of different scattering angles (e.g. more than 2 or more than 3) and a range of different wavelengths (e.g. more than 2 or more than 3). Scattering data 250 from the spectrometer 215 comprises the variation of scattering intensity with respect to both wavelength and scattering angle.

An adjustable illumination polarising filter 277 is disposed between the light source 205 and the sample cell 210, and is configured to allow the polarisation state of the illuminating light beam to be selected from a plurality of polarisation states which can be provided by the adjustable polarising filter 277 (e.g. horizontal, vertical, 45 degree, right circular, left circular and combinations thereof). An adjustable detection polarising filter 278 is disposed between the sample cell 210 and the entrance slit 211 of the spectrometer 215, and is configured to allow the polarisation state of the detected light to be selected from a plurality of polarisation states which can be provided by the adjustable polarising filter 278 (e.g. horizontal, vertical, 45 degree, right circular, left circular and combinations thereof). Any arrangement that is suitable for providing an adjustable polarising filter may be used in embodiments: examples include rotating polarisers, photo-elastic modulators with a polariser.

While certain embodiments may include both the illumination and detection adjustable polarising filters 277, 278, it will be understood that one of these adjustable polarising filters 277, 278 is sufficient to provide for the sequential selection of different polarisation states for analysis.

The polarisation state selected for analysis (by adjustable illumination polarising filter 277 and/or adjustable detection polarising filter 278) can be sequentially varied between a plurality of different states to allow Mie scattering ellipsometry to be performed on the sample.

Collection optics 300 may be provided between the sample cell 210 and the entrance slit 211, as described above (e.g. with reference to Figures 5 to 9) for mapping scattered light to different regions of the entrance slit 211 (and optionally enhancing the amount of scattered light at the entrance slit 211).

Figure 23 illustrates an alternative arrangement to that of Figure 22, in which only the entrance slit 211 of the spectrometer 215 is shown for concision. The entrance slit 211 in this example is arranged to receive side scattered light (at or about the 90 degree scattering angle associated with a Mie scattering ellipsometry Brewster angle) in the scattering plane (defined with reference to a vertical polarisation state of the illuminating light beam 220).

In other examples, rather than sequentially selecting different polarisation states for detection, scattered light with more than one polarisation may be selected and detected at the same time.

In the measurement data shown in Figure 21a, up to 60,000 total counts are available in a single detection channel as a particle passes through the laser and scatters light onto the detector. An amplitude splitting instrument that detects all four Stokes vector element simultaneously with different detector elements would still receive provide -15,000 counts per second per element per wavelength on the spectrometer detector. Photon counting imaging arrays are commercially available, and these signal levels are commensurate an effective signal to noise ratio S/N in the resulting ellipsometric measurement in a detector that employs such detectors.

Single shot Stokes vector measurement for MSE

In some embodiments, an amplitude splitting diffractive spectra-polarimeter for Mie scattering ellipsometry is provided. In which optical elements are used to map both scattering angle and different polarisation states of light onto different positions of an entrance slit of a spectrometer. For example a first subregion of a spectrometer entrance slit may receive a range of different scattering angles and a first polarisation state, a second region of the spectrometer entrance slit may receive the same range of scattering angles and a second, different polarisation state, and so on. The polarisation states may be selected to allow the Stokes vector to be determined. For example, the polarisation states mapped to different regions of the entrance slit may comprise: linear polarised light with polarisation orientations of 0 degrees, 90 degrees, -45 degree and +45 degrees, left hand circular polarised light and right hand circular polarised light. These polarisation states correspond with the elements of the Stokes vector and can be used to determine the Stokes vector for each scattering angle and wavelength that is detected.

It is also possible to determine the Stokes vector from four selected polarisations of light, and embodiments are envisaged which select four different polarisation states from which a Stokes vector may be determined (e.g. optimally) at which intensities at different scattering angles and different wavelengths will be simultaneously detected.

In some embodiments, different polarisation states are mapped to different positions on an entrance slit of a spectrometer. In other embodiments, at least some of the polarisation states may be mapped to different spectrometers. For example, there may be two spectrometers, each having an entrance slit that receives two polarisation states.

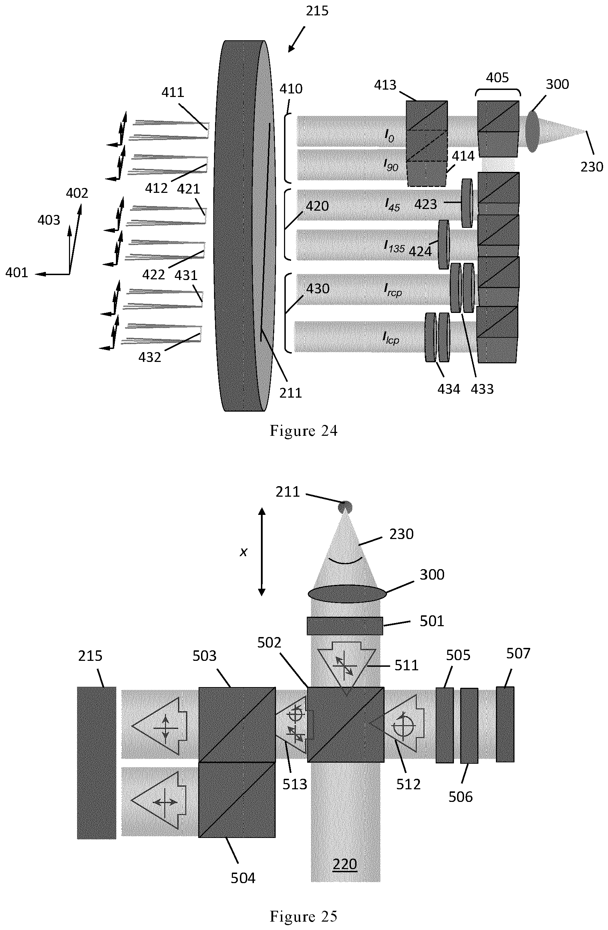

Figure 24 shows a schematic amplitude splitting diffractive spectra-polarimeter for Mie scattering ellipsometry, in which polychromatic scattered light 230 is collected by (optional) collection optic 300. The collection optic 300 receives a range of different scattering angles (e.g. of at least 20 degrees).

The scattered light 230 is split into three legs by non-polarising beam splitters 405. The final beam splitter may be replaced with a simple reflector.

In the first leg 410, a polarising beam splitter 413 selects vertical and horizontal linearly polarised light. The component of the scattered light with a vertical linear polarisation ($I_0$) is mapped to a first region 411 of an entrance slit 211 of spectrometer 215, with different scattering angles mapping to different positions in the first region 411. The component of the scattered light with a horizontal linear polarisation ($I_{90}$) is mapped to a second region 412 of the entrance slit 211 of the spectrometer 215 (e.g. via reflector 414), with different scattering angles mapping to different positions in the second region 412.

In the second leg 420, a 45 degree linear polarising filter 423 selects scattered light with a polarisation orientation of 45 degrees ($I_{45}$). A 135 degree linear polarising filter 424 selects -45 degree linearly polarised light ($I_{135}$). The component of the scattered light with a +45 degree linear polarisation is mapped to a third region 421 of the entrance slit 211 of the spectrometer 215, with different scattering angles mapping to different positions in the third region 421. The component of the scattered light with a -45 degree linear polarisation is mapped to a fourth region 422 of the entrance slit 211 of the spectrometer 215, with different scattering angles mapping to different positions in the fourth region 422.

In the third leg 430, a beam splitter provides scattered light to a quarter waveplate and a -45 degree linear polariser 433 to select right circular polarised light ($I_{rcp}$). A further beam splitter provides scattered light to a further quarter waveplate and a +45 degree linear polariser 434 to select left circular polarised light ($I_{lcp}$). The component of the scattered light with a right circular polarisation is mapped to a fifth region 431 of the entrance slit 211 of the spectrometer 215, with different scattering angles mapping to different positions in the third region 431, The component of the scattered light with a left circular polarisation is mapped to a sixth region 432 of the entrance slit 211 of the spectrometer 215, with different scattering angles mapping to different positions in the fourth region 432.

The different polarisation states received at the spectrometer 215 map directly to the components of the Stokes vector, as described above with reference to equation (2), so the Stokes vector for each wavelength and scattering angle can be determined. Although for ease of explanation, the components of the Stokes vector that are sampled in Figure 24 are those that enable facile determination of the parameters of equation (2) it will be understood that four appropriately selected different polarisation states can be used to determine the four parameters that comprise the Stokes vector.

**Diffractive Spectra-Polarimetry for Dual Phase Interferometry**

A small particle in solution can be modelled as a dipole scatterer with the incident ($\boldsymbol{E}_O$) and scattered ($\boldsymbol{E}_S$) fields related by,

$$\boldsymbol{E}_S \propto \alpha k^3 \boldsymbol{E}_O \qquad (4)$$

where, $\alpha$ is the particle's polarizability, $k = 2\pi/\lambda$ and $\lambda$ is the free-space wavelength. The material information can be related to the polarizability using,

$$\alpha(\omega) = 4\pi\epsilon_0 R^3 \frac{\varepsilon_p(\omega) - \varepsilon_d(\omega)}{\varepsilon_p(\omega) + 2\varepsilon_{d(\omega)}} \qquad (5)$$

where $R$ is the particle radius for an assumed spherical particle, $\varepsilon_0$ is the permittivity of free space, $\varepsilon_p$ is the dielectric constant of the particle $\varepsilon_d$ is the dielectric constant of the surrounding dispersant and $\omega$ is the frequency of the light. By interfering the scattered beam with a reference beam $\boldsymbol{E}_r$ having a known phase offset, $\phi$, it is possible to reduce the $(kR)^6$ dependence to $(kR)^3$, thereby significantly improving the detectability of very small particles, and the intensity of interference is given by:

$$I = |\boldsymbol{E}_S|^2 + |\boldsymbol{E}_R|^2 + 2|\boldsymbol{E}_S||\boldsymbol{E}_R|cos(\phi) \qquad (6)$$

Clearly $|\boldsymbol{E}_R| = \sqrt{I_R}$ is experimentally accessible (the intensity of the reference beam can be determined, for instance by monitoring the power of the reference beam). This leaves two unknowns in $\boldsymbol{E}_s$ and $\phi$. This issue can be resolved by simultaneously measuring the scattering into two polarisation states that have a known phase offset between them. The algebra is simplified by the use of a $\phi = \pi/2$ offset, which leads to the following:

$$I_i = |\boldsymbol{E}_S|^2 + |\boldsymbol{E}_R|^2 + 2|\boldsymbol{E}_S||\boldsymbol{E}_R|\cos(\phi + \delta_i) \qquad (7)$$

$$I_i = |\boldsymbol{E}_S|^2 + |\boldsymbol{E}_R|^2 + 2|\boldsymbol{E}_S||\boldsymbol{E}_R|\cos(\phi) \qquad (8a)$$

$$I_i = |\boldsymbol{E}_S|^2 + |\boldsymbol{E}_R|^2 + 2|\boldsymbol{E}_S||\boldsymbol{E}_R|\sin(\phi) \qquad (8b)$$

and

$$|\boldsymbol{E}_S| = \frac{\sqrt{(I_1 - |\boldsymbol{E}_R|^2)^2 + (I_2 - |\boldsymbol{E}_R|^2)^2}}{2|\boldsymbol{E}_R|} \qquad (9)$$

The phase offset of $\pi/2$ may be arranged by interfering a circular polarised reference beam with (45 degree) linearly polarized scattered light and then detecting the two resulting orthogonal polarisation (linear) states using a polariser. The relative phase between the scattered light and the reference beam at each detector will be offset in phase by $\pi/2$.

In this way the two terms $I_1$ and $I_2$ may be measured separately and simultaneously, allowing $|\boldsymbol{E}_s|$ to be calculated via equation (9). The particle polarizability and material dielectric constant are then calculated using equation (4) and (5) for an operator supplied value of $\varepsilon_d$, the dielectric constant of the dispersant.

An estimate of the particle size that makes use of data from multiple wavelengths and scattering angles in order to improve the simultaneous fit to both refractive index and particle size is noted in WO2023/285841, and may be applied to Mie Scattering Ellipsometry. With respect to dual phase interferometry, the Rayleigh criterion (particle size << $\lambda$) is an approximation, with laser diffraction able to measure particle sizes to an order of magnitude well below this 'limit' from the fractional differences in scattering between widely spaced scattering angles. Applications for embodiments of the present disclosure exist where sufficient fidelity remains in the angular scattering but where the dipole approximation remains valid for dual phase interferometry, so that the laser diffraction and dual phase interferometry analyses could be combined as part of an analytical fit to both data sets.

At each wavelength measured information can be derived about particle size $R$ and dielectric properties $\varepsilon_p(\omega)$. The more wavelengths that are measured, the more precise a measure of the particle's size and material can be extracted.

Material refractive index spectra, $\varepsilon_p(\omega)$, vary with material but many have regions that are either flat over a waveband or sufficiently flat across small intervals of wavelength. If a particle's specific polarizability $\alpha$ is non-constant over a particular waveband and $\varepsilon_d$ is constant, or has known non-constant values over the same waveband, and if it is safe to assume that particle radius $R$ does not vary with $\omega$, then the variation in $\alpha$ must be associated with $\varepsilon_p(\omega)$, and it may be possible to fit to a region where the first derivative of $\varepsilon_p(\omega)$ approaches zero.

Dual Phase Interferometry by Diffractive Spectra-Polarimetry

With reference to Equations (8a) and (8b), prior art schemes for dual phase interferometry collect either angular information, possibly at one or two discrete wavelengths, or collect polyspectral information but do not collect angularly resolved scattering. At first glance this distinction sounds subtle, but as described below, the implications of simultaneous collection of spectral and angular information is disruptive for nanoscale characterisation in a large range of applications.

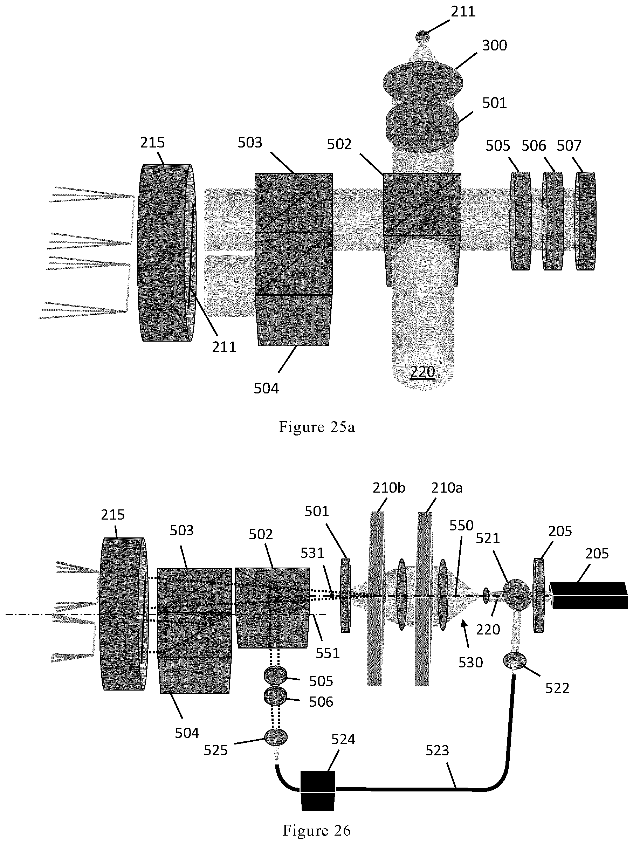

Figures 25 and 25a show a dual phase interferometry arrangement that resolves both different scattering angles and the spectra of the scattered light (e.g. at least three wavelengths).

Figures 25 and 25a include both instrumental and polarisation state schematics of the claimed invention. A first portion of polyspectral illuminating light beam 220 is incident on a sample particle 211 via (non-polarising) beam splitter/combiner 502, thereby producing back-scattered light. The back-scattered light is collected by collection optics 300 and linearly polarised by 45 degree linear polarising filter 501, thereby producing scattered light with 45 degree linear polarisation 511. A second portion of the illuminating light beam (split from the first portion at the beam splitter/combiner 502) is reflected from a mirror 507. Disposed between the mirror 507 and the beam splitter/combiner 502 is a quarter waveplate 505 (which is achromatic over the wavelengths of the illuminating light beam 220) and a 0 degree linear polarising filter 506. The quarter waveplate 505 and linear polarising filter 506 are together arranged to impart circular polarisation on the reflected second portion of the polyspectral illuminating light beam, which forms circular polarised reference beam 512 returning to the beam splitter/combiner 502. The beam splitter/combiner 502 combines the circular polarised reference beam 512 with the 45 degree linear polarised scattered light 511 from the sample to produce interference light 513. The interference light 513 comprises circular polarised light and light that is linearly polarised with a 45 degree polarisation orientation. Vertically polarised light and horizontally polarised light are provided to the entrance slit of spectrometer 215 via polarising beam splitter 503 and mirror/polarising beam splitter 504. The polarising beam splitter 503 and mirror/polarising beam splitter 504 map interference light corresponding with a range of scattering angles and a vertical linear polarisation to a first portion of the spectrometer entrance slit, and interference light corresponding with the range of scattering angles and a horizontal linear polarisation and to a second portion of the spectrometer entrance slit. The interference light is multi-spectral and the spectrometer 215 is configured to disperse the different wavelengths over a range of angles that is orthogonal with the range of scattering angles that is mapped to the entrance slit. The spectrometer 215 resolves intensity 401 at a range of positions that correspond with scattering angles 402 and wavelength 403 (e.g. with an array detector).

Although back-scattered light is detected in this embodiment, this is not essential and other general orientations of scattered light may be detected (in addition, or alternatively). This may be achieved with a combination of free space optics and fibre optics (e.g. analogous to the arrangement shown in Figure 9).

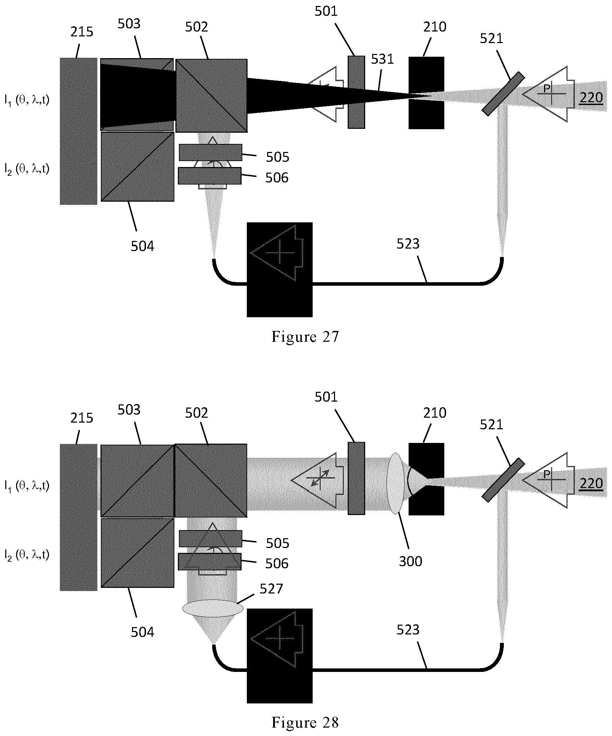

Figure 26 and 27 show an alternative embodiment for dual phase interferometry. Light source 205 produces a polyspectral illuminating light beam 220. The illuminating light beam is polarised by illumination polariser 206 (which may be a fixed linear polariser, for example, or a motorised variable polariser). The polarised illuminating light beam is sampled by beam sampler 521 (e.g. partially silvered mirror) and coupled to an optical fibre 523 via coupling optic 522 (e.g. GRIN lens). The polarised illuminating light beam 220 illuminates a sample cell 210a, 210b via illumination optics 530 (which may comprise a beam expander). The sample cell 210a, 210b may be positioned for Fourier illumination 210a, or reverse Fourier illumination 210b. Forward scattered light from the sample cell 210a, 210b passes through 45 degree linear polarising filter and is incident on beam combiner 502. The illuminating light beam is intercepted by beam stop 531 after passing through the sample cell 210a, 210b.

The sampled illuminating light that is coupled to the optical fibre 523 may have its phase adjusted by (optional) optical phase modulator 524 and then coupled back to free space by coupling optics 525 (e.g. GRIN lens). The sampled illuminating light is circular polarised by 0 degree linear polarising filter 506 and quarter wave plate 505 to form a reference beam. The reference beam is interfered with the 45 degree linearly polarised scattered light at combiner 502. The inference light from the combiner is again provided to a spectrometer, as described with reference to Figure 27.

Although in this example an optical fibre forms part of the reference beam optical path, other embodiments that detect forward scatter may equally use free space optics for the reference beam. It is also possible that the reference beam could pass directly through the sample cell in a forward scatter instrument without a re-directed reference path. Optical fibre-array arrangements can be used to sample light scattered at different scattering angles.

Phase differences resulting from an optical fibre in an optical path may be actively controlled (e.g. by an optical phase modulator), for example to deal with thermal fibre effects. Phase noise arising from non-stationary particles in the illumination beam in the sample may also be actively mitigated using such a phase modulator. An active feedback loop from another part of the system of from a processor configured to determine a measurement from the detected scattered light may be employed to control the phase modulator.

The Fresnel lens technique described herein is also applicable here, for example to avoid vignetting of circular fringes from the instrument at the spectrograph entrance slit.

Figure 28 illustrates an example embodiment in which collection optics are used to collimate the light scattered at different angles at the beam combiner 502. A corresponding optic 527 is provided for the reference beam.

By way of example, with reference to Figure 28, a zeta potential measurement may be performed by employing a variable electric field perpendicular to the direction of light propagation in the sample (e.g. vertically in Figure 28). The illuminating light beam may be collimated in the sample for zeta potential measurements, and the detected light scattered at (non-zero) forward angles may be used to determine a zeta potential.

A major simplifying factor for the scheme shown in Figures 25 to 28 is that the accessible angular scattering range is limited only by the spectrograph and polarising optics. Wide angle spectra-polarimetry is known in the context of astronomical observation and for very large angular ranges the collimator and camera lenses in the spectrometer can be replaced with mirrors and large format polarising optics that are widely available.

The angle at which the reference beam is recombined with the scattered light needs to complement the central scattering angle collected, in order to maintain the phase relationship between reference and scattering arms. This can be engineered into the instrument as a fixed relationship for a fixed central scattering angle or automated using motorised stages, etc. for instruments that include control over a variable central scattering angle.

Selectable and/or rotatable polarisers on accessory wheels may be used for any of the polarising filters and may be automated to allow a software initiated switch between ellipsometry, depolarised or non-polarised measurements, or Dual Phase Interferometry. Such motorised reconfiguration of the instrument avoids manual intervention which could require removing the instrument cover, handling costly and sensitive optics, etc.

Although the term 'quarter waveplate' is typically associated with wavelength dependent retardance, it is possible to obtain a quarter waveplate that is sufficiently achromatic that variation in retardance over the wavelengths of the polychromatic scattered light may be limited to a few percent in wavenumber (e.g. formed from crystalline quartz & UV Sapphire or crystalline quartz & magnesium fluoride).

Dual phase interferometry by diffractive spectra-polarimetry, as shown by way of example in Figures 25 to 28, preserves the angular information in the scattered signal from a range of angles, centred on either an instrumentally fixed or variable centre angle. Important new functionality not possible by the prior art and enabled by the present disclosure are described below.

Sample cell fluid dynamics

Phase errors across the focus of the illuminating beam are undesirable. Typically, great care is taken in laser diffraction instruments to avoid spatially resolved particle size fractionation across the fluid flow path and thence across the flow-channel at the detection point within the instrument. To achieve this, any flow in the sample cell is typically laminar, so that a flat-top line-shaped beam of constant width placed across the flow-path will mitigate issues associated with phase noise and spatially resolved particle traces at the instrument output (which may be associated with variable residence time in the beam from non-laminar and/or non-constant beam width orthogonal to the direction of the fluid flow).

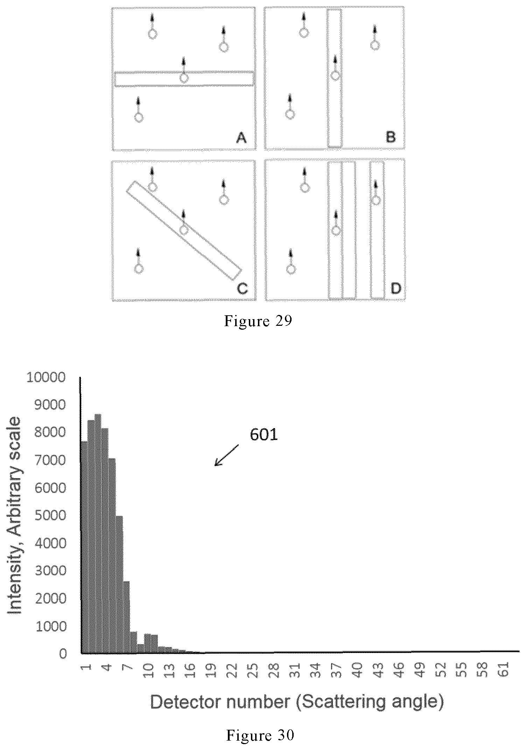

The spectrograph entrance slit creates a limited field of view (from which scattered light may be detected at the spectrograph) at the sample as shown in Figure 29. Consideration may be given to the relative orientation of the slit and the fluid flow. In case A, the slit is placed orthogonally to the direction of flow (assumed to be laminar for simplicity) whereas case B is aligned with the flow. Since dual phase interferometry is, optimally, a single particle technique, it is possible to measure a higher sample concentration using case A, however case B allows longer time-scale characterisation of the same particle. Scheme A would be more tolerant to non-laminar flow, since the spatial sampling of the fluid flow is smaller (and can be restricted to a central, laminar, region of flow). There may be a trade-off between the signal-to-noise per unit time of the measurement (over multiple particles), the sample concentration range accessible by the instrument and uncertainties associated with non-laminar flow. A compromise solution may be to tilt the slit with respect to the flow as shown in case C. An angle of approximately 45 degrees is shown, but other tilt angles may also be used.

Multiple slit locations, corresponding with case D in Figure 29, could be mapped along the entrance slit of the spectrometer (e.g. with reconfigurable optics, multiple entrance slits, or mapping of multiple lateral slit locations in the sample to different regions of one or more entrance slits using collection optics). For each slit location, angular scattering information (resolved at a range of angles) may be received along each slit, in addition to the multiple polarisation states from dual phase interferometry being mapped along the slit. Such an arrangement may enable improved signal to noise in the Dual Phase Interferometry measurement, and also improved sampling of the particle flow-field in the sample cell and/or the possibility to measure lower concentration samples than a single slit image instrument. Such an arrangement may also enable preservation of spatial information from the image field, where image slicers or optical fibre arrays, etc. are used to reformat parts of the image plane onto the spectrograph entrance slit.

Finally, for all schemes shown in Figure 29, it is possible to record a dispersant background between particles.

Any of the embodiments described herein may be optimised for a range of spectral bands and spectroscopic techniques. Examples include:

1. Spectral ranges such as gamma ray, x-ray, EUV, NUV, VIS, NIR, IR, Microwave including THz radiation, or any combination of those ranges. Preferable ranges include NUV, VIS, and NIR.

2. Optimisation for Raman and photoluminescent (fluorescence and phosphorescence) scattering.

3. All monochromatic light sources, or all detectable spectral resolution elements in the spectrograph, may be coaligned and optically scaled to provide the same apparent light source size. This may include co-alignment using dichroic optical elements, fibre-based supercontinua, etc.

As mentioned already, different samples may be analysed more optimally with illuminating light of a specific wavelength or waveband, polarisation state or states, or at a specific scattering angle or range of scattering angles. An instrument that simultaneously resolves scattering over a range of wavelengths and polarisation states and over a range of angles may create an optimal characterisation (e.g. of particle size and/or shape) with the highest signal to noise for any samples. This may be particularly applicable to samples that are polydisperse, multimodal and/or of mixed material composition, with complex media a particularly challenging example. Diffractive spectra-polarimetry enables the selection of an appropriate wavelength or wavelengths, polarisation state or states and angular scattering angle or angular range to measure and/or analyse a sample with either known properties or unknown properties. In the case of a sample with unknown properties, the wavelength(s) polarisation state(s) and scattering angle(s) for Mie scattering analysis may be selected after the measurement is taken.

Embodiments may be used to perform polyspectral Mie scattering ellipsometry and dual phase interferometry at a range of scattering angles, polarisation states and wavelengths simultaneously, avoiding spectral issues with an arbitrary sample such as particle material absorption and photoluminescence. Specific examples include the measurement of nano-inks, silver nanoparticles, ZnO nanoparticle development and Nanocrystalline $TiO_2$, amongst many others.

Embodiments may be used to provide an indication of the applicability of the optically spherical particle assumption from the ratio of polarised to depolarised scattering. For example, a perfectly optically spherical particle (internally and externally) should not depolarise the illuminating light during the scattering process, whereas any optical anisotropy, either internally or externally to each particle, will create a non-zero depolarised signal. For composite particles or agglomerates, etc., non-sphericity may be material dependent. For example, the bulk material of a particle may be spherical and of homogenous composition, but where other materials distributed within the particle may not be homogenously distributed (e.g., smaller particles of a different material than the main particle may be adhered, sometimes referred to as satellite particles). This may be identifiable by simultaneous characterisation of the angular and polarisation scattering over multiple wavelengths.

Embodiments may be used to provide an indication of the applicability of the Rayleigh model by inspection of the angular scattering and polarisation at a specific wavelength and/or in a specific waveband. In particular, embodiments may provide for the following:

i) Automatic switching between dual phase interferometry and an alternative measurement mode or method of data analysis that does not rely on the Rayleigh approximation. A specific example would be to switch between dual phase interferometry to Mie scattering ellipsometry, as appropriate, using a combined or integrated version of the specific embodiments associated with Mie scattering ellipsometry and dual phase interferometry described above. Of particular note would be a combination of features from Figures 25 to 29, which show embodiments for dual phase interferometry with features from Figures 22 to 24 for Mie scattering ellipsometry. In this case, a measurement scheme that includes polarising filters that may be configured for both dual phase interferometry and also adjusted for Mie scattering ellipsometry may be used. A specific embodiment may comprise a fixed 45 degree linear polariser on the illumination beam at the input the sample cell and then polarisation state analyser optics included for a polyspectral, multi-angle Mie scattering ellipsometry measurements, but which may be fixed at appropriate settings for a dual phase interferometry mode of the same instrument. Optical elements that are specific to each measurement mode (for example, at least one of: beam combiner 502, and reference beam optical path components 550, 506, 522-525, 527 in Figures 25 to 28) could be switched in and out as required (e.g. using moveable mirrors or optical switching elements). Another specific embodiment would be to switch between analysers that do and do not rely on the Rayleigh approximation, with specific application to Dual Phase Interferometry, for example

ii) Application of an anisotropic scattering model to the data set either prior to the measurement, such as in instrument software, or in post-processing, or adaptively during the measurement itself. Specific embodiments may include using the polarised and depolarised scattering in combination to provide an estimate of the degree of particle anisotropy either on a single particle or particle ensemble measurement basis.

In some embodiments, the apparatus may be adaptive, so that aspects of configuration can be modified in response the characteristics of the sample (whether these are known *a priori* or determined through an initial analysis step with the apparatus).

Examples of such adaptive features include, but are not limited to:

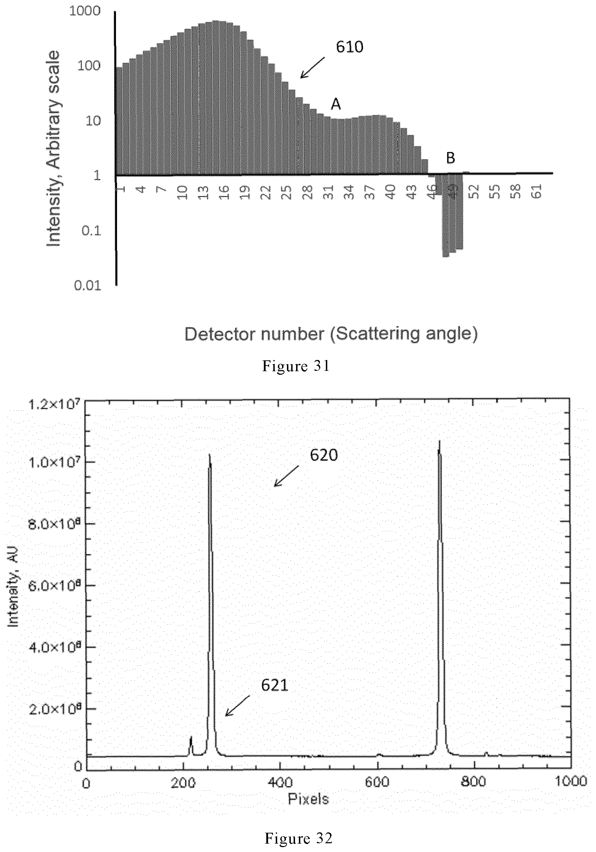

Varying the optical configuration in order to alter the analysed angular range of scattering. For example, alteration of the distance, *x*, in Figure 25 and /or the angle between the optical axes of the illumination 550 and the optical axis 551 of the beam combiner 502 and spectrograph 215 in Figure 26, and the variation in the scattering data in Figures 30 and 31.

Varying the polarisation configuration of the instrument based on the measurement of the scattered data.

Modification of the spectrograph internal magnification by variable optical components, such as deformable mirrors and/or lenses, or moveable lens elements.

Variable slit width or interchangeable slits, with a manual or automated mechanism for adjustment/interchange.

Embodiments may be configured to provide automation of a measurement, including autosampling and autotitration (of sample chemistry, etc.) without operator interaction with the instrument; and/or the recording of all, some subset, or some derived set, of data from the instrument to allow post-processing of the data, thereby enabling off-line polyspectral Mie scattering ellipsometry, dual phase interferometry and laser diffraction analysis and over analysis different "settings" (i.e. wavelength, scattering angle, polarisation state) from identically the same data (meaning that the scattering data for the different "settings" arises from light scattering from the same particle(s) at the same time).

Figure 30 illustrates scattering intensity with respect to detector number 601 (corresponding with scattering angle) for a sample with relatively large particles, in which scattering at shallow angles dominates. The detectors configured to receive scattering at relatively large angles are not contributing significantly to the measurement. If the detectors can be reconfigured to receive light scattered over a smaller range, as shown in Figure 31, the key features of the scattering pattern A and B can be more readily determined.

Figure 32 illustrates an emission spectra that includes closely spaced features (e.g., the double peak between 220 and 260 pixels) that would benefit from enhancement of spectral resolution (at the expense of the free spectral range). To control either the angular or spectral range independently of one another, optics may be used comprising variable focus cylindrical lenses. The variable focus cylindrical lenses may provide a different focal length and therefore different magnification for the spectral and angular paths through the spectrometer. Liquid lenses (cylindrical and otherwise) and deformable mirrors may be used to provide this functionality.

A diffractive spectra-polarimeter may create very large data-sets (GB's) in a few seconds or more. An instrument may run at its native spectral resolution (>1000, for example) but where the data captured may be spectrally binned in spectral regions that could be reasonably fitted (e.g. based on a Mie scattering model) at lower spectral resolution. This spectral binning approach may enable reduced data storage, which may be particularly useful for remote instruments, process monitoring instruments, etc.

Specific applications of the above schemes may require a specific implementation. Such applications may include a laboratory instrument, a handheld device or where the instrument is miniaturised to clip onto a mobile phone as a detector, or a remote location as a sensor-based instrument. The apparatus may comprise any suitable configuration of spectrograph such as a Lipmann waveguide spectrometer, Fourier transform spectrometer, or Czerny-Turner spectrometer. The spectrograph may comprise ruled, blazed or un-blazed gratings, holographic, prism, array waveguide gratings, echelle or otherwise, Fabry-Perot cavities, acousto-optical tunable filter, laminar gratings for the x-ray region of the spectrum, etc.

In some embodiments the light source may illuminate the sample via an optical fibre (for example in addition to fibre coupled collection of scattered light). In some embodiments, optical fibres may be used to allow remote characterisation from an in-situ optical head to a remotely placed light source and spectrometer. Remote sample characterisation may be particularly useful for dangerous or difficult to reach locations such as in nuclear or chemical reactors, within industrial machinery, the seas and oceans at depth, drilled bore-holes, etc.

In some embodiments the apparatus may be configured to record background spectra and/or polarisation state from the dispersant and subtracted this from the particle scattering + background in order to isolate the spectra and polarisation state of the scattered light, from background sources.

A spectral flat-field at all detection angles may be provided by a suitable molecular (solid, liquid or gas) or particulate sample, for instance, a Rayleigh scatterer, which scatters isotropically, but with a well-defined relationship between the scattered intensity and the wavelength. Detector sensitivity and chromatic response of the apparatus could then be characterised simultaneously. An admixture or separate optical calibration cell may be provided, to sit alongside the sample cell, containing a suitable 'calibration' scatterer so that a spectral flat field may be used as a live spectral baseline upon which the emission and absorption peaks of the scattering sample of interest would be imprinted. This may be advantageous where a very high level of precision and accuracy in the measurement is required and particularly when the spectrometer may be located in an unstable environment (thermal, motion, electromagnetic, atmospheric, radioactive, etc.) such as in industrial process monitoring, vehicular emissions, hand-held devices, planetary observation, etc. the calibration scatterer may comprise a concentration selected to so that absorption minima attenuate but do not completely remove spectral lines of interest from the illuminating light path to the sample cell.

Any particular light collecting optical fibre may be illuminated with a spatially resolved portion of the scattered light field, such as near-to or over a Mie minimum. The encoding of spatially resolved information into the spectrum of fibre modes is complex, but for highly multimodal fibres the ray optical model comprising one ray angle within the fibre for each supported mode is a reasonable approximation (with skew rays ignored as an unnecessary complication for this argument). As the light rays propagate along the fibre they partially scatter from inclusions either within in the core or at the core-cladding boundary. Since each mode within the fibre is characterised by a separate ray angle with respect to the fibre axis, then this scattering is tantamount to scattering amongst fibre modes. As this process continues along the fibre, higher and higher order modes are populated with the limit that the numerical aperture of the fibre is populated and often exceeded. In this case all spatially resolved information in the collected portion of the light field at the input to the fibre is smeared out. However, this process, known as focal ratio degradation, is rarely complete and image scrambling is a problem for fibre based spectroscopy, as any spatially resolved information in the fibre-nearfield, at the spectrograph entrance slit, acts to offset the optical barycentre and its image on the spectrograph detector: in short, the spectral resolution element on the spectrograph detector becomes object (scattered light field) dependent.

A further problem for high spectral dispersion studies is that the modes of the optical fibre interfere with each other causing a speckle pattern in the near and far-fields at the fibre output. This is a coherent / partially coherent process, known as modal noise, and tiny perturbations to the thermal or positional stability of the fibre, along its length, will cause the optical output field of each fibre to boil in a pseudo-speckle pattern. This manifests itself in an additional noise component along the spectrum whose value is instrumentally limited and which cannot be mitigated with increases in integration time (and therefore the number of collected photons per resolution element). This problem has been detected in spectrometers with resolving powers as low as R ~ 3k to 5k.

Optical image scramblers, such as the double lens scrambler that help prevent image scrambling issues and fibre agitators, that vibrate or move the optical fibres before they are fed to the spectrograph may be used in certain embodiments to address the problems of incomplete image scrambling and modal noise. Fibre agitation may be accomplished at high frequency and low amplitude (e.g. at least 1 kHz at < 1 mm amplitude) and/or low frequency and high amplitude (e.g. less than 10Hz at amplitudes of >1mm to 1m) of fibre movement. The apparatus may be configured to perform live optimisation of these factors by maximising the signal to noise in the recorded spectra, in relation to the time frequency content of the scattered field.

In transient, repeated single shot, autosampled and/or autotitrated or otherwise time resolved or time-critical measurements the analysis may reduce the scattering at each unit of spectral resolution into a particle size distribution (and this may be per polarisation state in polarisation discriminating detection schemes). This is computationally demanding and appropriate parallelisation of the analysis may be employed to speed analysis (so that results can be provided in near-real time, for example with a delay of less than 5 seconds or 2 seconds, or less than 200 milliseconds, or less than 100 milliseconds, or for very fast-dynamic applications such as air-based dispersion of large particles, atmospheric and planetary sensing from mobile platforms, etc. less than 500 microseconds or less than 100 microseconds). This might include parallelisation on a spectral element, range of spectral elements and/or polarisation-states. Such an approach may be well suited to a quality control (QC) environment where time critical monitoring of samples is commonplace and critical to quality.

In certain embodiments, Mie scattering analysis of two distinct spectral resolution elements on the detector may be interpolated to give a third resolution element (or more) between them. This may be computationally advantageous for: live monitoring of processes requiring reduced wavelength resolution; in applications with limited computing power such as hand-held; or mobile devices or remote probes or where particle size distributions are fitted to spectral absorption features.

In certain embodiments, the scattering data vs wavelength for direct spectral analysis may be presented to the user, and/or particle size vs spectral data vs time/measurement instance. Scattering data may also be presented on a per-polarisation state basis (linear vertical, linear horizontal, left and right polarised, left and right elliptical, etc).

The apparatus may be configured to perform particle size dependent chemical analyses such as absorption, emission, phosphorescence, Raman scattering, photoluminescence, etc. vs particle size and /or polarisation state. Such analyses may require management of a library, either locally, on a centralised server or cloud based. The apparatus may be configured to connect with such libraries, for timely identification of particle materials.

The apparatus may be configured to use approximation models to associate material parameters with spectral surface extrema.

The apparatus may be configured to measure spectral and/or polarisation data and to use this to determine (or refine an estimate for) a refractive index value used by the Mie scattering analysis to determine particle size.

In certain embodiments, the measurement of spectral and/or polarisation data and its use to optimise the refractive index value needed by the Mie scattering analysis for particle shape.

The apparatus may be configured to iteratively use spectral and particle size information to separate multiple distinct populations. For example, mixtures of materials of the same size but different material.

The apparatus may be configured to pixel bin in the angular direction to provide minimised uncertainty in the particle-size measurement. The trade-off is angular uncertainty (the number of pixels along the scattering angle axis) vs signal-to-noise on each angular detector element.

In some embodiments, alarms can be set, either in the factory or by the user, to feed back to the user the presence of materials, identified from the particle size, the polarimetry and the spectrographic distributions. In certain embodiments, machine learning algorithms may be used to train an artificial neural network to identify particular size distribution, material or composition from the combined scattering data.

Applications for embodiments are briefly mentioned below:

The precise and accurate characterisation of particulate dispersions without the need for a user to provide an a priori estimate of the particle refractive index. This is an important application as it provides a means of measurement for complex nanoscale samples, which include, but are not limited to, dispersions of mixtures of particles of varying size, materials, external and internal morphologies, polarizability, optical activity, etc. There is an additional potential benefit in that the technologies used herein are closely related with known laboratory techniques such as laser diffraction. Embodiments therefore benefit from existing operator training and close alignment the regulatory framework relating to, for example, laser diffraction (ISO 13320 - Laser Diffraction).

The measurement of the polarizability or refractive index or complex refractive index of individual particles which are then applied on a single-particle basis to the reduction of the scattering to a particle characteristic distribution. Specific examples of this characteristic are, but are not limited to, size, volume, number, mass, density, core-shell ratio, filling fraction for pharmaceutical particulate delivery systems

Separate characterisation of the excipient and active components in complex formulations. In pharmaceutical formulation development where there is a need to characterise particle size distribution of the active formulation, compared to the raw material, for example to demonstrate Q3 equivalence of candidate biosimilars to an innovator product. Embodiments of the invention may be applied to this problem and significantly reduce time to market for pharmaceutical products.

Dissolution studies, to determine the rate at which the API in a formulation is dissolved, which is related to the bioavailability of the active component.

Characterisation of multiple size fractions composed entirely of different materials or particle size fractions where multiple materials exist within the same particle size fraction. For example, the characterisation of the separate components of airborne particulate samples, inhaler sprays and aerosols.

Size and surface area dependent particle coating studies using this technique, where the strength of the spectral signal per particle size fraction may be used to determine the presence and/or effectiveness of the coating.

Characterisation of chemical alteration of the particles of particular size distributions such as changes in optical activity by chemical titration, for instance.

Characterisation of adsorption of materials to the particle surface. For instance, spectra in particular size classes before and after the addition of surfactants and adsorptive materials such as protein coatings, etc.

Characterisation of optical activity of the particulate fraction vs particle size and material type.

Time resolved spectral studies such as changes in spectra due to photobleaching, etc.

Analysis of nano or micro-particle colour vs particle size and polarisation state and changes to the colour as a function of chemical titration or chemical or nano- or micro-particle additives.

Simultaneous characterisation of diesel particulates and pollen in the atmosphere.

Separable characterisation of mixtures of cereal grains, aggregate minerals, food stuffs of different types, etc.

Live particle size and/or spectra and/or polarisation analysis to determine if the particle shape or its optical anisotropy is changing over time or from sample aliquot to sample aliquot. Machine learning techniques may be applied to determine if friable particles are being ground in the dispersion unit or at a remote location, if the particles are crystallising, agglomerating, aggregating, swelling, dissolving, or any other particle size, material, composition or shape dependent effect, from pre-learnt training data (size distribution, spectra, optical activity, time, aliquot number).

One application is the characterisation of 'satellite' particles in 3D printing feed powders, which are known to impact the application of the powder to the powder bed (due the irregular particle shape) and the density and integrity of the final, formed part.

Applications relating to studies of underlying physics such as polarisation by scattering, the response of dispersed particles by alteration of the dispersant.

Particle size/polarisation dependent spectral line position and/or shape/red- or blue-shift analysis.

Spectral characterisation of diffusion (or otherwise) broadening or shape alteration of spectral lines to estimate the particle size below the Rayleigh limit for diffraction, where angular scattering variation has fallen below the instrument noise limit and therefore its ability to measure a difference between two particles size distributions below the Rayleigh limit is mitigated.

Although a number of specific examples and embodiments have been described, the scope of the invention should be determined with reference to the accompanying claims.

**Claims**

1.  A particle characterisation apparatus, comprising:

    a sample cell for containing or supporting a sample comprising particles;
    a polychromatic light source configured to illuminate the sample cell with a polychromatic illumination beam along an illumination axis, thereby producing scattered light from the interaction of the illumination beam with particles of the sample;
    a spectrograph arranged to receive and detect the scattered light and detect a variation in scattering intensity with respect to scattering angle and with respect to a wavelength of the scattered light.

2.  The apparatus of claim 1, wherein the spectrograph comprises an entrance slit configured to receive scattered light with a plurality of different scattering angles.

3. The apparatus of claim 2, wherein:

   the polychromatic light source is configured to illuminate the sample with linearly polarised light, the orientation of the linear polarisation defining a scattering plane; and

   the entrance slit of the spectrograph is oriented parallel with the scattering plane, perpendicular to the scattering plane, or at an angle of 45 degrees to the scattering plane.

4. The apparatus of claim 3, wherein the spectrograph is a first spectrograph, and the apparatus further comprises a second spectrograph, the second spectrograph comprising an entrance slit configured to receive a plurality of different scattering angles, the entrance slit of the second spectrograph oriented differently to that of the first spectrograph.

5. The apparatus of claim 2 or 3 or 4, wherein the spectrograph comprises a dispersive element and an array detector, wherein the dispersive element is configured to disperse light in a direction transverse to the entrance slit.

6. The apparatus of any of claims 2 to 5, wherein the apparatus comprises a collection optic, configured to map light scattered over a first range of scattering angles to a first range of locations on the entrance slit.

7. The apparatus of claim 6, wherein the collection optic comprises a faceted optical element having a plurality of facets, each facet configured to receive light scattered at a range of scattering elevation angles of less than 10 degrees and at a range of azimuth angles of at least 90 degrees, and to focus the received light to a different location on the entrance slit.

8. The apparatus of claim 7, wherein the faceted optical element comprises a Fresnel lens or reflector.

9. The apparatus of any of claims 6 to 8, wherein the collection optic comprises an optical fibre.

10. The apparatus of any of claims 6 to 9, wherein the mapping of scattering angle to position along the entrance slit is discontinuous.

11. The apparatus of any preceding claim, wherein the apparatus is configured to perform Mie scattering ellipsometry at a plurality of scattering angles and a plurality of wavelengths; and the apparatus comprises: an adjustable polarising illumination filter and/or an adjustable polarising detection filter, the adjustable polarising illumination filter and/or adjustable polarising detection filter operable to sequentially select polarisation states of scattered light for detection to enable the Stokes vector for the scattered light to be determined.

12. The apparatus of any preceding claim, wherein the apparatus is configured to perform Mie scattering ellipsometry at a plurality of scattering angles and a plurality of wavelengths by amplitude splitting of light in at least four different polarisation states, the polarisation states selected to enable determination of the Stokes vector for the scattered light; wherein the detector is configured to receive each of the polarisation states of scattering for each of the plurality of scattering angles and each of the plurality of wavelengths at the same time.

13. The apparatus of any preceding claim, wherein the apparatus is configured to perform dual phase interferometry, and comprises:

   a beam splitter, for sampling at least a portion of the illumination beam;

   a reference beam polariser, configured to circularly polarise the sampled portion of the illumination beam to form a reference beam;

   a scatter polarising filter, configured to pass scattered light having a 45 degree linear polarisation, thereby producing polarised scattered light with multiple scattering angles and multiple wavelengths;

   a beam combiner, configured to interfere the reference beam and the polarised scattered light to form interference light; and

   a polarising beam splitter, configured to split the interference light into a first linearly polarised component and a second linearly polarised component, the second linearly polarised component having a polarisation orientation orthogonal to the first linearly polarised component,

   wherein the spectrograph receives both the first and second linearly polarised component.

14. The apparatus of claim 13, wherein a reference beam optical path between the beam splitter and the beam combiner comprises an optical fibre and/or a fixed optical path.

15. A method of characterising particles, comprising:

illuminating a sample comprising particles with a polychromatic light beam; and
detecting scattered light created by the interaction of the polychromatic light beam with the particles using a spectrograph,
wherein the spectrograph is arranged to detect a variation in scattering intensity with respect to scattering angle and with respect to wavelength of the scattered light.

Figure 1

Figure 2

211
216
209
220
207
210
206
208
205

Figure 3

Figure 4

Figure 5

Figure 6

Figure 6a

Figure 7

Figure 8

Figure 9

Figure 10

Figure 11

Figure 12

Figure 13

Figure 14

Figure 15

Figure 15a

Figure 16

Figure 16a

217
231
276
217a
220
107 210
205
215
Polarisation state Polarisation state
1 2
250
203
202
201

Figure 17

Figure 18

Figure 19

Figure 20

Figure 21a

Figure 21b

Figure 21c

Figure 22

Figure 23

Figure 24

Figure 25

211

300

501

215    503    502    505  506  507

211

504

220

Figure 25a

210b    210a

215

503    502    501    550  521    205

531    205

220

551    530

505

506    522

504    525    524    523

Figure 26

215  503  502  501  210  521  531

$I_1 (\theta, \lambda, t)$

$I_2 (\theta, \lambda, t)$

505
506

504

220

523

Figure 27

215  503  502  501  210  521

$I_1 (\theta, \lambda, t)$

$I_2 (\theta, \lambda, t)$

505
506

527

504

300

220

523

Figure 28

Figure 29

Detector number (Scattering angle)

Figure 30

Figure 31

Figure 32

**Europäisches Patentamt**
**European Patent Office**
**Office européen des brevets**

# EUROPEAN SEARCH REPORT

Application Number

EP 23 20 0198

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/234865 A1 (GABRIEL DON [US]) 21 August 2014 (2014-08-21) | 1,4-15 | INV. G01N15/02 |
| Y | * paragraphs [0008] - [0264] * | 2,3 | G01N15/075 G01N15/10 |
| X | US 2015/300881 A1 (TAKENAKA KEI [JP] ET AL) 22 October 2015 (2015-10-22) * paragraphs [0032] - [0058]; figure 1 * | 1,15 | G01N21/21 G01N21/47 G01N15/00 |
| Y | US 7 440 102 B1 (VIDEEN GORDEN [US]) 21 October 2008 (2008-10-21) * columns 2-7; figures 1-7 * | 2,3 | |

**TECHNICAL FIELDS SEARCHED (IPC)**

G01N

The present search report has been drawn up for all claims

| Place of search | Date of completion of the search | Examiner |
|---|---|---|
| The Hague | 19 March 2024 | Ionescu, C |

EPO FORM 1503 03.82 (P04C01)

## ANNEX TO THE EUROPEAN SEARCH REPORT
## ON EUROPEAN PATENT APPLICATION NO.

**EP 23 20 0198**

This annex lists the patent family members relating to the patent documents cited in the above-mentioned European search report.
The members are as contained in the European Patent Office EDP file on
The European Patent Office is in no way liable for these particulars which are merely given for the purpose of information.

**19-03-2024**

| Patent document cited in search report | | | Publication date | Patent family member(s) | | | Publication date |
|---|---|---|---|---|---|---|---|
| US 2014234865 | A1 | | 21-08-2014 | CA | 2842681 | A1 | 24-01-2013 |
| | | | | US | 2014234865 | A1 | 21-08-2014 |
| | | | | US | 2016356695 | A1 | 08-12-2016 |
| | | | | US | 2020150023 | A1 | 14-05-2020 |
| | | | | WO | 2013013229 | A1 | 24-01-2013 |
| US 2015300881 | A1 | | 22-10-2015 | JP | 5895064 | B2 | 30-03-2016 |
| | | | | JP | WO2014073064 | A1 | 08-09-2016 |
| | | | | US | 2015300881 | A1 | 22-10-2015 |
| | | | | WO | 2014073064 | A1 | 15-05-2014 |
| US 7440102 | B1 | | 21-10-2008 | NONE | | | |

EPO FORM P0459

For more details about this annex : see Official Journal of the European Patent Office, No. 12/82

**EP 4 530 603 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018069024 A

- WO 2023285841 A